# EUROPEAN PATENT APPLICATION

(11) **EP 4 813 747 A1**
(43) Date of publication of application: **30.09.2026**
(21) Application number: 24893981.1
(22) Date of filing: 05.11.2024
(51) Int. Cl.: B60Q 1/26, B60Q 1/50, F21S 2/00, F21V 23/00, F21Y 105/10, F21Y 115/10, F21Y 115/20, F21Y 115/30

(54) **ROAD SURFACE DRAWING DEVICE**

(30) Priority: 24.11.2023 JP 2023199093; 24.11.2023 JP 2023199094
(71) Applicant: Koito Manufacturing Co., Ltd., Tokyo 141-0001 (JP)
(72) Inventor: TANI, Kentaro, Shizuoka-shi, Shizuoka 424-8764 (JP); WATANABE, Ken, Shizuoka-shi, Shizuoka 424-8764 (JP); KITAZAWA, Yukiko, Shizuoka-shi, Shizuoka 424-8764 (JP)
(74) Representative: Cabinet Beau de Loménie
(86) International application number: PCT/JP2024/039242
(87) International publication number: WO 2025/109989

(57) **Abstract**

A light pattern is divided into a plurality of regions in a traveling direction of the vehicle. The first region is further divided into a plurality of second regions in the traveling direction of the vehicle. After the second regions located closest to the vehicle in the plurality of first regions are each drawn, remaining second regions not drawn in the plurality of first regions are drawn.

## Description

### TECHNICAL FIELD

The present disclosure relates to a road surface drawing device.

### BACKGROUND ART

Patent Literature 1 discloses a road surface drawing device mounted on a vehicle and configured to irradiate light onto a road surface to draw a light pattern on the road surface, thereby indicating an intention to other traffic participants (pedestrians, passengers of other vehicles, and the like).

### CITATION LIST

### PATENT LITERATURE

Patent Literature 1: International Publication No. WO2020/067113

### SUMMARY OF INVENTION

### TECHNICAL PROBLEM

Incidentally, the present inventors have noticed that, for example, when a light pattern is drawn in which an irradiation region changes stepwise from a region closest to a vehicle toward a region farthest from the vehicle, there is a risk that a timing at which traffic participants such as pedestrians around the vehicle recognize the light pattern may be delayed.

One of the objects of the present disclosure is to provide a road surface drawing device capable of quickly conveying a traveling direction of a vehicle to traffic participants located far from the vehicle.

In addition, for example, when a light pattern is drawn in a blinking manner, there are cases in which traffic participants such as pedestrians around a vehicle may have difficulty grasping a traveling direction of the vehicle as expressed by the blinking light pattern. In addition, for example, there is a method of expressing a traveling direction of a vehicle by drawing a light pattern in which an irradiation region changes stepwise from a region closest to the vehicle toward a region farthest from the vehicle; however, there is a risk that a timing at which traffic participants such as pedestrians located far from the vehicle recognize the light pattern may be delayed.

One of the objects of the present disclosure is to provide a road surface drawing device capable of quickly conveying a traveling direction of a vehicle to traffic participants around the vehicle.

### SOLUTION TO PROBLEM

A road surface drawing device according to one aspect of the present invention is
a road surface drawing device mounted on a vehicle and configured to draw a light pattern on a road surface, in which
the light pattern is divided into a plurality of first regions in a traveling direction of the vehicle,
the first regions are further divided into a plurality of second regions in the traveling direction of the vehicle, and
after the second regions located closest to the vehicle in the plurality of first regions are each drawn, remaining second regions not drawn in the plurality of first regions are drawn.

According to the above configuration, since at least portions of the plurality of first regions are each first drawn, at least a portion of the first region located far from the vehicle is also drawn. In addition, in the plurality of first regions, the plurality of second regions are drawn stepwise in order of proximity to the vehicle, and thus movement of light corresponding to operation of the vehicle can be expressed in each of the first regions. As a result, the traveling direction of the vehicle can be quickly conveyed also to traffic participants located far from the vehicle.

A road surface drawing device according to one aspect of the present invention is
a road surface drawing device mounted on a vehicle and configured to draw a light pattern on a road surface, in which
the light pattern is divided into a plurality of regions in a traveling direction of the vehicle,
light is irradiated to all the regions at a start of drawing of the light pattern, and
an illuminance of a farthest region located farthest from the vehicle is lower than an illuminance of a nearest region located closest to the vehicle at the start of the drawing, and increases as drawing time of the light pattern elapses.

According to the above configuration, since all regions constituting the light pattern are simultaneously drawn, even traffic participants located far from the vehicle can quickly recognize the light pattern. In addition, since the illuminance of the farthest region increases as the drawing time elapses, the light pattern changes such that illuminance increases from regions closer to the vehicle as the drawing time elapses. As a result, traffic participants around the vehicle can be caused to recognize as if an irradiation region of the light pattern were drawn so as to increase stepwise from the nearest region toward the farthest region. Therefore, the traveling direction of the vehicle can be quickly conveyed to traffic participants around the vehicle.

### ADVANTAGEOUS EFFECTS OF INVENTION

According to the present disclosure, a road surface drawing device capable of quickly conveying a traveling direction of a vehicle to traffic participants located far from the vehicle can be provided.

According to the present disclosure, a road surface drawing device capable of quickly conveying a traveling direction of a vehicle to traffic participants around the vehicle can be provided.

### BRIEF DESCRIPTION OF DRAWINGS

[FIG. 1] Fig. 1 illustrates a light pattern drawn on a road surface by a road surface drawing device mounted on a vehicle.
[FIG. 2] Fig. 2 illustrates a configuration of the road surface drawing device.
[FIG. 3] Fig. 3 illustrates turning on and off timings of a light source that forms a first region located closest to the vehicle and constituting the light pattern illustrated in Fig. 1.
[FIG. 4] Fig. 4 illustrates turning on and off timings of a light source that forms a first region located in the middle and constituting the light pattern illustrated in Fig. 1.
[FIG. 5] Fig. 5 illustrates turning on and off timings of a light source that forms a first region located farthest from the vehicle and constituting the light pattern illustrated in Fig. 1.
[FIG. 6] Fig. 6 illustrates an aspect of drawing of a light pattern formed based on the turning on and off timings illustrated in Figs. 3 to 5.
[FIG. 7] Fig. 7 illustrates a road situation in which a wall is present between a pedestrian and a light pattern.
[FIG. 8] Fig. 8 illustrates another example of turning on and off timings of the light source that forms the first region located closest to the vehicle and constituting the light pattern illustrated in Fig. 1.
[FIG. 9] Fig. 9 illustrates another example of turning on and off timings of the light source that forms the first region located in the middle and constituting the light pattern illustrated in Fig. 1.
[FIG. 10] Fig. 10 illustrates another example of turning on and off timings of the light source that forms the first region located farthest from the vehicle and constituting the light pattern illustrated in Fig. 1.
[FIG. 11] Fig. 11 illustrates an aspect of drawing of a light pattern formed based on the turning on and off timings illustrated in Figs. 8 to 10.
[FIG. 12] Fig. 12 illustrates another example of a light pattern drawn on the road surface by the road surface drawing device mounted on the vehicle.
[FIG. 13] Fig. 13 illustrates a light pattern drawn on the road surface by the road surface drawing device mounted on the vehicle.
[FIG. 14] Fig. 14 illustrates a configuration of the road surface drawing device.
[FIG. 15] Fig. 15 illustrates a time chart showing turning on and off of semiconductor light-emitting elements of a light source unit.
[FIG. 16] Fig. 16 illustrates an aspect of drawing of a light pattern formed based on the time chart showing turning on and off of the light source unit illustrated in Fig. 15.
[FIG. 17] Fig. 17 illustrates a time chart showing turning on and off of semiconductor light-emitting elements of the light source unit according to Variation 1.
[FIG. 18] Fig. 18 illustrates an aspect of drawing of a light pattern formed based on the turning on and off of the light source unit illustrated in Fig. 17.
[FIG. 19] Fig. 19 illustrates a time chart showing turning on and off of semiconductor light-emitting elements of the light source unit according to Variation 2.
[FIG. 20] Fig. 20 illustrates a time chart showing turning on and off of semiconductor light-emitting elements of the light source unit according to Variation 3.
[FIG. 21] Fig. 21 illustrates a time chart showing turning on and off of semiconductor light-emitting elements of the light source unit according to Variation 4.
[FIG. 22] Fig. 22 illustrates a time chart showing turning on and off of semiconductor light-emitting elements of the light source unit according to Variation 5.
[FIG. 23] Fig. 23 illustrates an aspect of a light pattern whose drawing is erased based on the turning on and off of the light source unit illustrated in Fig. 22.
[FIG. 24] Fig. 24 illustrates a time chart showing turning on and off of semiconductor light-emitting elements of the light source unit according to Variation 6.

### DESCRIPTION OF EMBODIMENTS

Hereinafter, embodiments of the present invention will be described with reference to the drawings. Note that, for convenience of description, the dimension of each member shown in the drawings may be different from the dimension of each actual member. In addition, in the drawings described below, a reference sign U indicates an upward direction. A reference sign D indicates a downward direction. A reference sign F indicates a forward direction. A reference sign B indicates a rearward direction. A reference sign L indicates a leftward direction. A reference sign R indicates a rightward direction. These directions correspond to directions as viewed from an occupant in a vehicle 100.

### (First Embodiment)

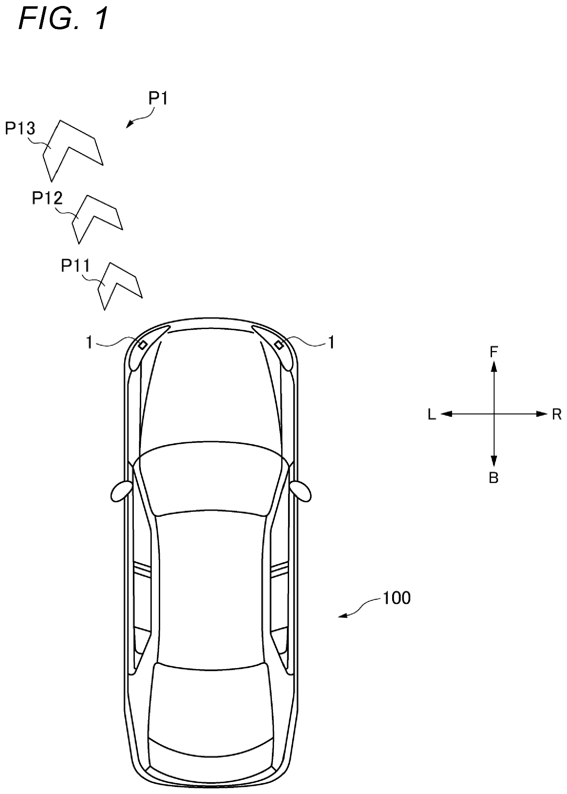

Fig. 1 illustrates a light pattern P1 drawn by a road surface drawing device 1 according to the present embodiment. The road surface drawing device 1 is mounted on the vehicle 100. In the present example, the road surface drawing device 1 is arranged in a lamp chamber of a headlamp of the vehicle 100.

The road surface drawing device 1 is configured to draw a light pattern P1 on a road surface by irradiating light onto the road surface. In the present example, the light pattern P1 is a pattern for notifying surroundings of the vehicle 100 of a leftward lane change of the vehicle 100. The light pattern P1 is, for example, drawn on the road surface while a lamp (not shown) for notifying surroundings of the vehicle 100 of a leftward lane change of the vehicle 100 is lit.

The light pattern P1 is divided into a plurality of first regions in a traveling direction of the vehicle 100. In the present example, the light pattern P1 includes three first regions P11, P12, and P13. The first regions P11, P12, and P13 are divided in a left-forward direction with respect to the vehicle 100. The first region P11 is located closest to the vehicle 100. The first region P13 is located farthest from the vehicle 100. The first region P12 is located between the first region P11 and the first region P13. The first regions P11, P12, and P13 are aligned at intervals along the left-forward direction with respect to the vehicle 100.

The "left-forward" direction is a direction extending "leftward" and "forward."

In the present example, the first regions P11, P12, and P13 are each formed in an arrowhead (chevron) shape. The first regions P11, P12, and P13 have larger areas as the first regions are located farther from the vehicle 100.

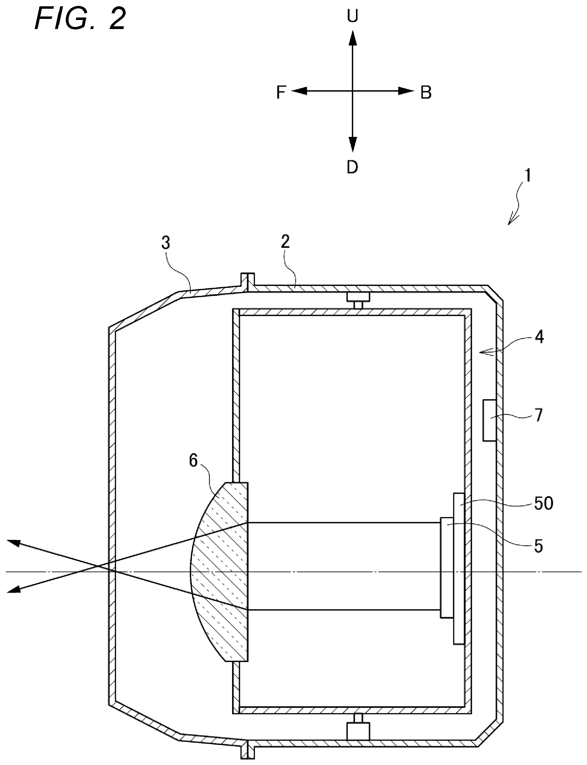

Fig. 2 illustrates a configuration of the road surface drawing device 1. As illustrated in Fig. 2, the road surface drawing device 1 includes a lamp body 2 and an outer cover 3. The lamp body 2 is configured to have an opening at a front side of a lamp. The outer cover 3 is light-transmissive and is configured to cover the opening of the lamp body 2. A lamp chamber 4 is formed by the lamp body 2 and the outer cover 3.

The road surface drawing device 1 includes a light source unit 5, an optical member 6, and a control unit 7. The light source unit 5, the optical member 6, and the control unit 7 are accommodated in the lamp chamber 4.

The light source unit 5 includes, for example, a plurality of semiconductor light-emitting elements (not shown). Examples of the semiconductor light-emitting device include a light-emitting diode (LED) element, a laser diode (LD), and an EL element. The plurality of semiconductor light-emitting elements are arranged in an array form, for example, in up-down and left-right directions on a substrate 50.

The optical member 6 is configured to refract light emitted from the light source unit 5 and emit the light toward a road surface. The optical member 6 is, for example, a planoconvex lens having a front surface that is a convex surface and a rear surface that is a plane surface. The optical member 6 is formed of a light-transmissive material, for example, a transparent resin such as acrylic.

The control unit 7 is configured to control turning on and off of the light source unit 5. Specifically, the control unit 7 individually controls turning on and off of the plurality of semiconductor light-emitting elements constituting the light source unit 5 such that at least a portion of the light pattern P1 is drawn on the road surface. The control unit 7 includes, for example, a microcontroller and an analog drive control circuit. The microcontroller includes a general-purpose microprocessor, such as a CPU, an MPU, or a GPU, and a general-purpose memory, such as a ROM or a RAM. The analog drive control circuit includes a current control circuit configured to control current supplied to each of the plurality of semiconductor light-emitting elements of the light source unit 5.

In the following, control of turning on and off of the light source unit 5 by the control unit 7 will be described in detail.

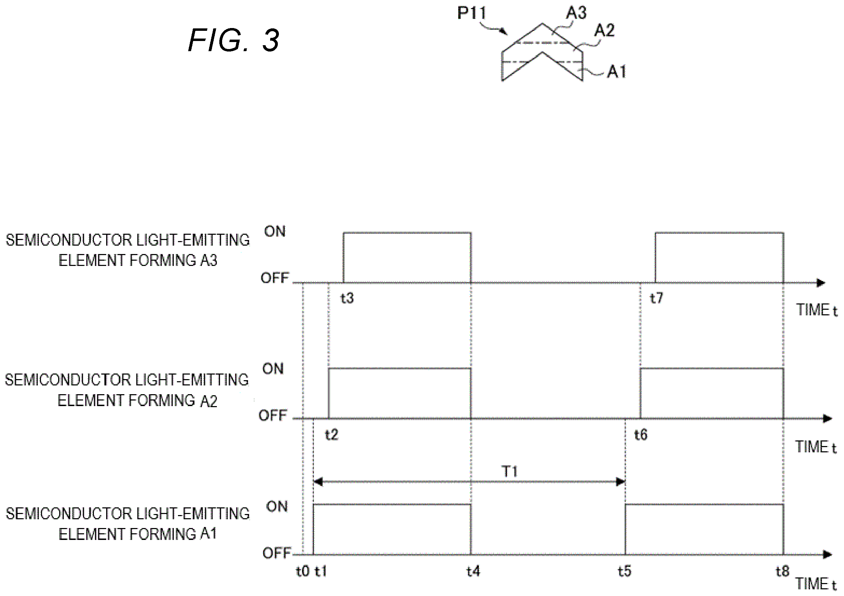

First, control of turning on and off of the light source unit 5 related to drawing of the first region P11 of the light pattern P1 will be described with reference to Fig. 3. Fig. 3 illustrates turning on and off timings of the semiconductor light-emitting elements of the light source unit 5, which emit light forming the first region P11 of the light pattern P1.

As illustrated in the upper part of Fig. 3, the first region P11 of the light pattern P1 is divided into a plurality of second regions in the traveling direction of the vehicle 100. In the present example, the first region P11 includes three second regions A1, A2, and A3. The second regions A1, A2, and A3 are divided in the left-forward direction with respect to the vehicle 100. The second region A1 is located closest to the vehicle 100. The second region A3 is located farthest from the vehicle 100. The second region A2 is located between the second region A1 and the second region A3. The second regions A1, A2, and A3 are aligned without intervals along the left-forward direction.

The control unit 7 performs control of turning on and off of the light source unit 5 such that, after the second region A1 located closest to the vehicle 100 is drawn on the road surface, the plurality of remaining second regions A2 and A3 are stepwise drawn on the road surface in order of proximity to the vehicle 100.

Specifically, as illustrated in the lower part of Fig. 3, the control unit 7 controls the light source unit 5 such that, at the start of drawing of the light pattern P1, a semiconductor light-emitting element that emits light forming the second region A1 among the plurality of semiconductor light-emitting elements of the light source unit 5 is turned on. When drawing of the light pattern P1 starts at time t1, the control unit 7 turns on, at time t1, a semiconductor light-emitting element that emits light forming the second region A1.

Subsequently, the control unit 7 controls the light source unit 5 such that a semiconductor light-emitting element that emits light forming the second region A2 among the plurality of semiconductor light-emitting elements of the light source unit 5 is turned on. Specifically, the control unit 7 turns on, at time t2, a semiconductor light-emitting element that emits light forming the second region A2. For example, time t2 may be set to about 0.1 seconds to 0.4 seconds after time t1. As a result, the second region A2 is drawn on the road surface about 0.1 seconds to 0.4 seconds after the second region A1 is drawn.

Subsequently, the control unit 7 controls the light source unit 5 such that a semiconductor light-emitting element that emits light forming the second region A3 among the plurality of semiconductor light-emitting elements of the light source unit 5 is turned on. Specifically, the control unit 7 turns on, at time t3, a semiconductor light-emitting element that emits light forming the second region A3. For example, time t3 may be set to about 0.1 seconds to 0.4 seconds after time t2. As a result, the second region A3 is drawn on the road surface about 0.1 seconds to 0.4 seconds after the second region A2 is drawn.

Then, the control unit 7 controls the light source unit 5 such that, at the end of drawing of the light pattern P1, the drawings of the second regions A1, A2, and A3 are erased simultaneously. Specifically, after all of the second regions A1, A2, and A3 are drawn, the control unit 7 simultaneously turns off, at time t4, the plurality of semiconductor light-emitting elements emitting light forming the second regions A1, A2, and A3. For example, time t4 may be set to about 0.3 to 1.2 seconds after time t3. As a result, the drawings of the second regions A1, A2, and A3 are erased about 0.3 seconds to 1.2 seconds after the second region A3 is drawn.

The light pattern P1 is, for example, repeatedly drawn in association with blinking of a lamp (not shown) for notifying surroundings of the vehicle 100 of a leftward lane change of the vehicle 100.

When the drawing of the light pattern P1 is repeated at a predetermined period T1, the drawing of the first region P11 is also repeated at the predetermined period T1. Note that the period T1 is appropriately set in association with a blinking period of the lamp (not shown) for notifying surroundings of the vehicle 100 of a leftward lane change of the vehicle 100. The period T1 is, for example, about 0.5 seconds to 1.0 second.

Specifically, as illustrated in the lower part of Fig. 3, the control unit 7 turns on, at time t5 at which the period T1 has elapsed from time t1, the semiconductor light-emitting element that emits light forming the second region A1 among the plurality of semiconductor light-emitting elements of the light source unit 5.

Subsequently, the control unit 7 turns on, at time t6, the semiconductor light-emitting element that emits light forming the second region A2 among the plurality of semiconductor light-emitting elements of the light source unit 5. Subsequently, the control unit 7 turns on, at time t7, the semiconductor light-emitting element that emits light forming the second region A3 among the plurality of semiconductor light-emitting elements of the light source unit 5. Then, after all of the second regions A1, A2, and A3 are drawn, the control unit 7 simultaneously turns off, at time t8, the plurality of semiconductor light-emitting elements emitting light forming the second regions A1, A2, and A3.

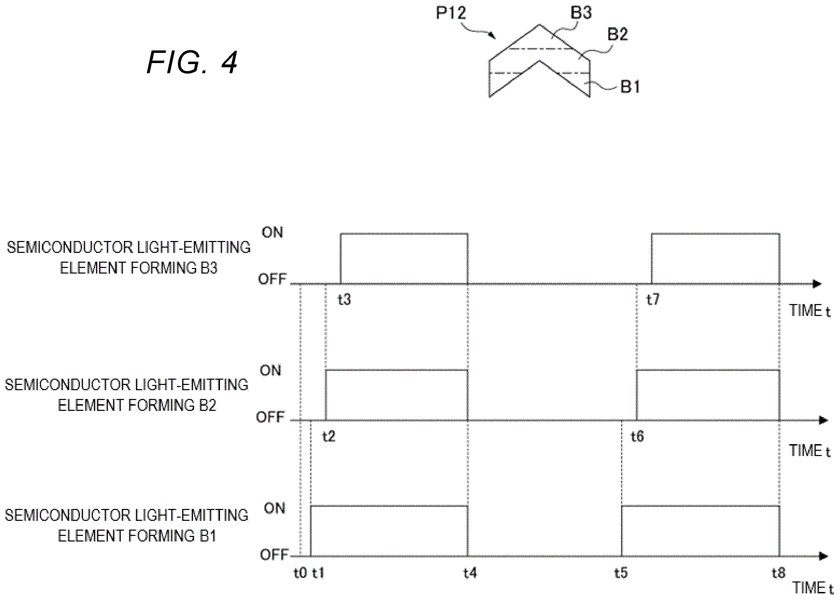

Next, control of turning on and off of the light source unit 5 related to drawing of the first region P12 of the light pattern P1 will be described with reference to Fig. 4. Fig. 4 illustrates turning on and off timings of the semiconductor light-emitting elements of the light source unit 5, which emit light forming the first region P12 of the light pattern P1. The first region P12 is drawn in the same manner as the first region P11.

Specifically, as illustrated in the upper part of Fig. 4, the first region P12 of the light pattern P1 is divided into a plurality of second regions in the traveling direction of the vehicle 100. In the present example, the first region P12 includes three second regions B1, B2, and B3. The second regions B1, B2, and B3 are divided in the left-forward direction with respect to the vehicle 100. The second region B1 is located closest to the vehicle 100. The second region B3 is located farthest from the vehicle 100. The second region B2 is located between the second region B1 and the second region B3. The second regions B1, B2, and B3 are aligned without intervals along the left-forward direction.

The control unit 7 performs control of turning on and off of the light source unit 5 such that, after the second region B1 located closest to the vehicle 100 is drawn on the road surface, the plurality of remaining second regions B2 and B3 are stepwise drawn on the road surface in order of proximity to the vehicle 100.

Specifically, as illustrated in the lower part of Fig. 4, the control unit 7 controls the light source unit 5 such that, at the start of drawing of the light pattern P1, a semiconductor light-emitting element that emits light forming the second region B1 among the plurality of semiconductor light-emitting elements of the light source unit 5 is turned on. That is, the control unit 7 turns on, at time t1, a semiconductor light-emitting element that emits light forming the second region B1. As a result, the second region B1 of the first region P12 is drawn simultaneously with the second region A1 of the first region P11.

Subsequently, the control unit 7 controls the light source unit 5 such that a semiconductor light-emitting element that emits light forming the second region B2 among the plurality of semiconductor light-emitting elements of the light source unit 5 is turned on. Specifically, the control unit 7 turns on, at time t2, a semiconductor light-emitting element that emits light forming the second region B2. As a result, the second region B2 of the first region P12 is drawn simultaneously with the second region A2 of the first region P11.

Subsequently, the control unit 7 controls the light source unit 5 such that a semiconductor light-emitting element that emits light forming the second region B3 among the plurality of semiconductor light-emitting elements of the light source unit 5 is turned on. Specifically, the control unit 7 turns on, at time t3, a semiconductor light-emitting element that emits light forming the second region B3. As a result, the second region B3 of the first region P12 is drawn simultaneously with the second region A3 of the first region P11.

Then, the control unit 7 controls the light source unit 5 such that, at the end of drawing of the light pattern P1, the drawings of the second regions B1, B2, and B3 are erased simultaneously. Specifically, after all of the second regions B1, B2, and B3 are drawn, the control unit 7 simultaneously turns off, at time t4, the plurality of semiconductor light-emitting elements emitting light forming the second regions B1, B2, and B3. As a result, the drawings of the second regions B1, B2, and B3 of the first region P12 are erased simultaneously with the second regions A1, A2, and A3 of the first region P11.

When the drawing of the light pattern P1 is repeated at a predetermined period T1, the drawing of the first region P12 is also repeated at the predetermined period T1 in the same manner as the drawing of the first region P11.

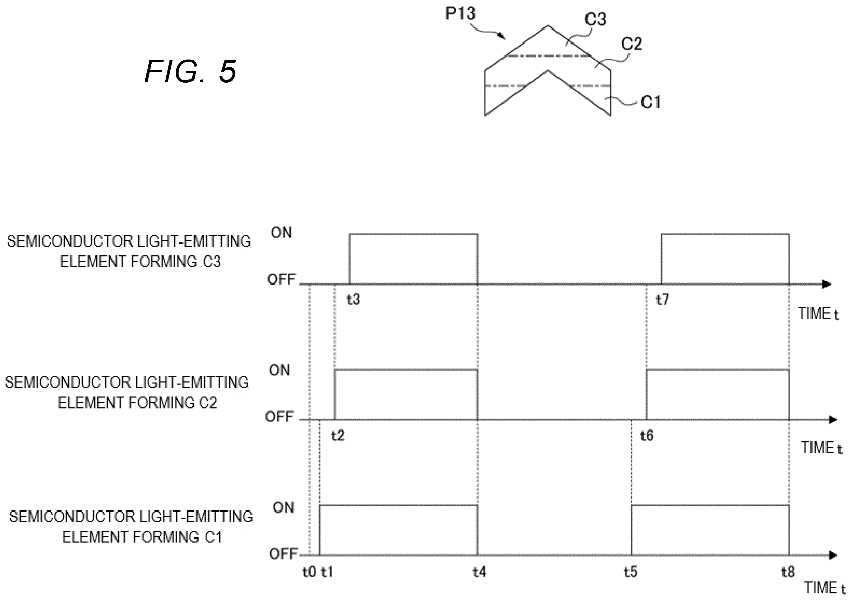

Next, control of turning on and off of the light source unit 5 related to drawing of the first region P13 of the light pattern P1 will be described with reference to Fig. 5. Fig. 5 illustrates turning on and off timings of the semiconductor light-emitting elements of the light source unit 5, which emit light forming the first region P13 of the light pattern P1. The first region P13 is drawn in the same manner as the first regions P11 and P12.

Specifically, as illustrated in the upper part of Fig. 5, the first region P13 of the light pattern P1 is divided into a plurality of second regions in the traveling direction of the vehicle 100. In the present example, the first region P13 includes three second regions C1, C2, and C3. The second regions C1, C2, and C3 are divided in the left-forward direction with respect to the vehicle 100. The second region C1 is located closest to the vehicle 100. The second region C3 is located farthest from the vehicle 100. The second region C2 is located between the second region C1 and the second region C3. The second regions C1, C2, and C3 are aligned without intervals along the left-forward direction.

The control unit 7 performs control of turning on and off of the light source unit 5 such that, after the second region C1 located closest to the vehicle 100 is drawn on the road surface, the plurality of remaining second regions C2 and C3 are stepwise drawn on the road surface in order of proximity to the vehicle 100.

Specifically, as illustrated in the lower part of Fig. 5, the control unit 7 controls the light source unit 5 such that, at the start of drawing of the light pattern P1, a semiconductor light-emitting element that emits light forming the second region C1 among the plurality of semiconductor light-emitting elements of the light source unit 5 is turned on. Specifically, the control unit 7 turns on, at time t1, a semiconductor light-emitting element that emits light forming the second region C1. As a result, the second region C1 of the first region P13 is drawn simultaneously with the second region A1 of the first region P11 and the second region B1 of the first region P12.

Subsequently, the control unit 7 controls the light source unit 5 such that a semiconductor light-emitting element that emits light forming the second region C2 among the plurality of semiconductor light-emitting elements of the light source unit 5 is turned on. Specifically, the control unit 7 turns on, at time t2, a semiconductor light-emitting element that emits light forming the second region C2. As a result, the second region C2 of the first region P13 is drawn simultaneously with the second region A2 of the first region P11 and the second region B2 of the first region P12.

Subsequently, the control unit 7 controls the light source unit 5 such that a semiconductor light-emitting element that emits light forming the second region C3 among the plurality of semiconductor light-emitting elements of the light source unit 5 is turned on. Specifically, the control unit 7 turns on, at time t3, a semiconductor light-emitting element that emits light forming the second region C3. As a result, the second region C3 of the first region P13 is drawn simultaneously with the second region A3 of the first region P11 and the second region B3 of the first region P12.

Then, the control unit 7 controls the light source unit 5 such that, at the end of drawing of the light pattern P1, the drawings of the second regions C1, C2, and C3 are erased simultaneously. Specifically, after all of the second regions C1, C2, and C3 are drawn, the control unit 7 simultaneously turns off, at time t4, the plurality of semiconductor light-emitting elements emitting light forming the second regions C1, C2, and C3. As a result, the second regions C1, C2, and C3 of the first region P13 are drawn simultaneously with the second regions A1, A2, and A3 of the first region P11.

When the drawing of the light pattern P1 is repeated at a predetermined period T1, the drawing of the first region P13 is also repeated at the predetermined period T1 in the same manner as the drawings of the first regions P11 and P12.

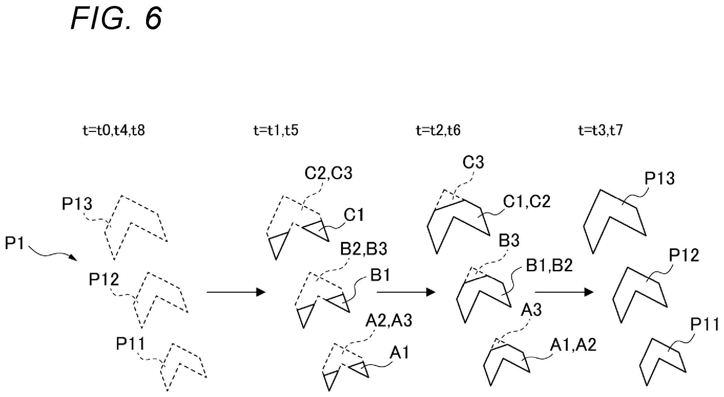

Fig. 6 illustrates an aspect of drawing of the light pattern P1 formed based on the turning on and off timings of the light source unit 5 illustrated in Figs. 3 to 5. In Fig. 6, a region surrounded by a broken line is a region that is not irradiated with light from the road surface drawing device 1 and is not drawn on the road surface, and a region surrounded by a solid line is a region that is irradiated with light from the road surface drawing device 1 and is drawn on the road surface.

As illustrated in Fig. 6, at time t0 shown in Figs. 3 to 5, drawing of the light pattern P1 has not been started, and regions of the road surface on which the first regions P11, P12, and P13 are drawn are not irradiated with light from the road surface drawing device 1. Subsequently, at time t1, which is a drawing start time of the light pattern P1, the second regions A1, B1, and C1 located closest to the vehicle 100 in the first regions P11, P12, and P13, are each drawn.

Subsequently, at time t2, the second regions A2, B2, and C2 adjacent to the second regions A1, B1, and C1 in the first regions P11, P12, and P13 are each drawn. That is, in the light pattern P1, both the second regions A1, B1, and C1 and the second regions A2, B2, and C2 in the first regions P11, P12, and P13 are drawn.

Subsequently, at time t3, the second regions A3, B3, and C3 located farthest from the vehicle 100 in the first regions P11, P12, and P13, are each drawn. That is, in the light pattern P1, all the second regions in the first regions P11, P12, and P13 are drawn.

Then, at time t4, the drawings of all the second regions in the first regions P11, P12, and P13 are erased. When the drawing of the light pattern P1 is repeated at a predetermined period T1, the drawings of the first regions P11, P12, and P13 are repeated at the predetermined period T1.

Incidentally, for example, when a light pattern is drawn in which an irradiation region changes stepwise from a region closest to the vehicle 100 toward a region farthest from the vehicle 100, there is a risk that a timing at which traffic participants such as pedestrians around the vehicle 100 recognize the light pattern may be delayed.

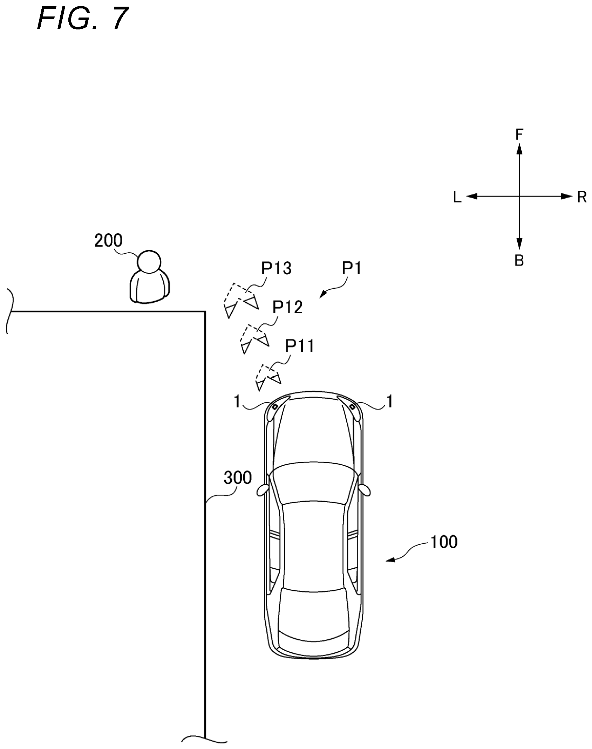

Fig. 7 illustrates a situation in which a wall 300 is present between a pedestrian 200 and the first region P11 of the light pattern P1, and the pedestrian 200 cannot visually recognize the first region P11. The pedestrian 200 is an example of a traffic participant. The wall 300 is an example of an obstacle.

For example, when the light pattern P1 to be drawn on a road surface is drawn stepwise from the first region P11 closest to the vehicle 100 toward the first region P13 farthest from the vehicle 100, the pedestrian 200 cannot visually recognize the first region P11 due to the wall 300 present between the pedestrian 200 and the first region P11 closest to the vehicle 100. As a result, in a situation in which only the first region P11 is drawn at the start of drawing of the light pattern P1, the pedestrian 200 cannot visually recognize the light pattern P1.

In contrast, according to the road surface drawing device 1 of the present embodiment, as illustrated in FIG. 7, at the start of drawing of the light pattern P1, at least portions (second regions A1, B1, and C1) of the plurality of first regions P11, P12, and P13 are each first drawn. That is, at the start of drawing of the light pattern P1, at least a portion of the first region P13 located far from the vehicle 100 is also drawn. As a result, the pedestrian 200 located far from the vehicle 100 can recognize the light pattern P1 from the start of drawing of light pattern P1. In addition, since the plurality of second regions in the first regions P11, P12, and P13 are drawn stepwise in order of proximity to the vehicle 100, a movement of light corresponding to an operation of the vehicle 100 (in the present example, an operation of advancing in the left-forward direction) can be expressed within each of the first regions P11, P12, and P13. Accordingly, the traveling direction of the vehicle 100 can be quickly conveyed to the pedestrian 200 located far from the vehicle 100.

Note that, in the present embodiment, the light pattern P1 is divided into the three first regions P11, P12, and P13. However, the light pattern P1 may be divided into two first regions, or four or more first regions.

In addition, in the present embodiment, the first regions P11, P12, and P13 are each divided into three second regions. However, the first regions P11, P12, and P13 may each be divided into two second regions, or four or more second regions.

In addition, in the present embodiment, the drawings of all the second regions of the first regions P11, P12, and P13 of the light pattern P1 are simultaneously erased. However, the road surface drawing device 1 may be configured such that, after the drawings of the second regions A1, B1, C1 located closest to the vehicle 100 in the first regions P11, P12, and P13 of the light pattern P1 are each erased, the drawings of the remaining second regions A2, A3, B2, B3, C2, and C3 are erased.

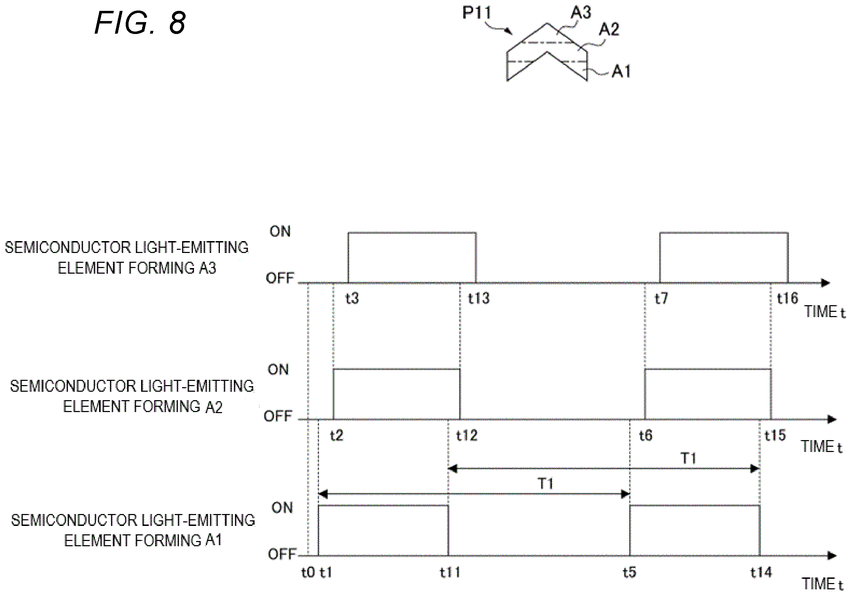

Another example of the control of turning on and off of the light source unit 5 by the control unit 7 will be described with reference to Figs. 8 to 11. Fig. 8 illustrates turning on and off timings of the semiconductor light-emitting elements of the light source unit 5, which emit light forming the first region P11 of the light pattern P1.

The control unit 7 performs control of turning on and off of the light source unit 5 such that, after the second region A1 located closest to the vehicle 100 is drawn on the road surface, the plurality of remaining second regions A2 and A3 are stepwise drawn on the road surface in order of proximity to the vehicle 100. Note that, since the control of turning on and off of the light source unit 5 is the same as the control of turning on and off of the light source unit 5 illustrated in Fig. 3, a detailed description will be omitted.

The control unit 7 performs control of turning off of the light source unit 5 such that, after all the second regions A1, A2, and A3 are drawn, the drawing of the second region A1 located closest to the vehicle 100 is erased, and then the drawings of the remaining second regions A2 and A3 are erased.

Specifically, as illustrated in the lower part of Fig. 8, the control unit 7 controls the light source unit 5 such that a semiconductor light-emitting element emitting light forming the second region A1 among the plurality of semiconductor light-emitting elements of the light source unit 5 is turned off. Specifically, the control unit 7 turns off, at time t11, a semiconductor light-emitting element emitting light forming the second region A1. For example, time t11 may be set to about 0.3 seconds to 1.2 seconds after time t1.

Subsequently, the control unit 7 controls the light source unit 5 such that a semiconductor light-emitting element emitting light forming the second region A2 among the plurality of semiconductor light-emitting elements of the light source unit 5 is turned off. Specifically, the control unit 7 turns off, at time t12, a semiconductor light-emitting element emitting light forming the second region A2. For example, time t12 may be set to about 0.1 seconds to 0.4 seconds after time t11. As a result, the drawing of the second region A2 is erased about 0.1 seconds to 0.4 seconds after the drawing of the second region A1 is erased.

Subsequently, the control unit 7 controls the light source unit 5 such that a semiconductor light-emitting element emitting light forming the second region A3 among the plurality of semiconductor light-emitting elements of the light source unit 5 is turned off. Specifically, the control unit 7 turns off, at time t13, a semiconductor light-emitting element emitting light forming the second region A3. For example, time t13 may be set to about 0.1 seconds to 0.4 seconds after time t12. As a result, the drawing of the second region A3 is erased about 0.1 seconds to 0.4 seconds after the drawing of the second region A2 is erased.

When the drawing of the light pattern P1 is repeated at a predetermined period T1, the erasing of the drawing of the first region P11 is also repeated. Specifically, after all the second regions A1, A2, and A3 are drawn, the control unit 7 turns off, at time t14, the semiconductor light-emitting element emitting light forming the second region A1 among the plurality of semiconductor light-emitting elements of the light source unit 5. Subsequently, the control unit 7 turns off, at time t15, the semiconductor light-emitting element emitting light forming the second region A2 among the plurality of semiconductor light-emitting elements of the light source unit 5. Subsequently, the control unit 7 turns off, at time t16, the semiconductor light-emitting element emitting light forming the second region A3 among the plurality of semiconductor light-emitting elements of the light source unit 5.

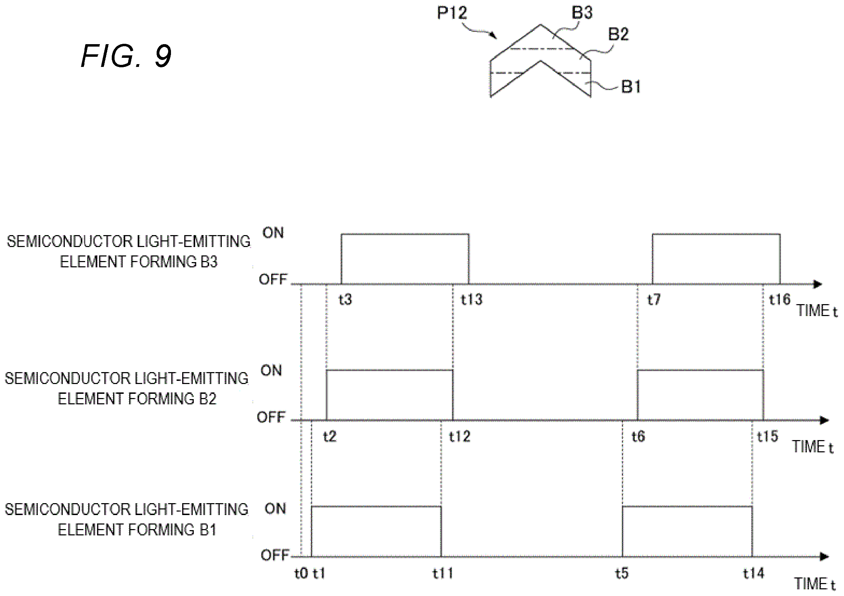

Fig. 9 illustrates turning on and off timings of the semiconductor light-emitting elements of the light source unit 5, which emit light forming the first region P12 of the light pattern P1.

The control unit 7 performs control of turning on and off of the light source unit 5 such that, after the second region B1 located closest to the vehicle 100 is drawn on the road surface, the plurality of remaining second regions B2 and B3 are stepwise drawn on the road surface in order of proximity to the vehicle 100. Note that, since the control of turning on and off of the light source unit 5 is the same as the control of turning on and off of the light source unit 5 illustrated in Fig. 4, a detailed description will be omitted.

The control unit 7 performs control of turning off of the light source unit 5 such that, after all the second regions B1, B2, and B3 are drawn, the drawing of the second region B1 located closest to the vehicle 100 is erased, and then the drawings of the remaining second regions B2 and B3 are erased.

Specifically, as illustrated in the lower part of Fig. 9, the control unit 7 controls the light source unit 5 such that a semiconductor light-emitting element emitting light forming the second region B1 among the plurality of semiconductor light-emitting elements of the light source unit 5 is turned off. Specifically, the control unit 7 turns off, at time t11, a semiconductor light-emitting element emitting light forming the second region B1. As a result, the drawing of the second region B1 of the first region P12 is erased simultaneously with the drawing of the second region A1 of the first region P11.

Subsequently, the control unit 7 controls the light source unit 5 such that a semiconductor light-emitting element emitting light forming the second region B2 among the plurality of semiconductor light-emitting elements of the light source unit 5 is turned off. Specifically, the control unit 7 turns off, at time t12, a semiconductor light-emitting element emitting light forming the second region B2. As a result, the drawing of the second region B2 of the first region P12 is erased simultaneously with the drawing of the second region A2 of the first region P11.

Subsequently, the control unit 7 controls the light source unit 5 such that a semiconductor light-emitting element emitting light forming the second region B3 among the plurality of semiconductor light-emitting elements of the light source unit 5 is turned off. Specifically, the control unit 7 turns off, at time t13, a semiconductor light-emitting element emitting light forming the second region B3. As a result, the drawing of the second region B3 of the first region P12 is erased simultaneously with the drawing of the second region A3 of the first region P11.

When the drawing of the light pattern P1 is repeated at a predetermined period T1, the erasing of the drawing of the first region P12 is also repeated in the same manner as the first region P11.

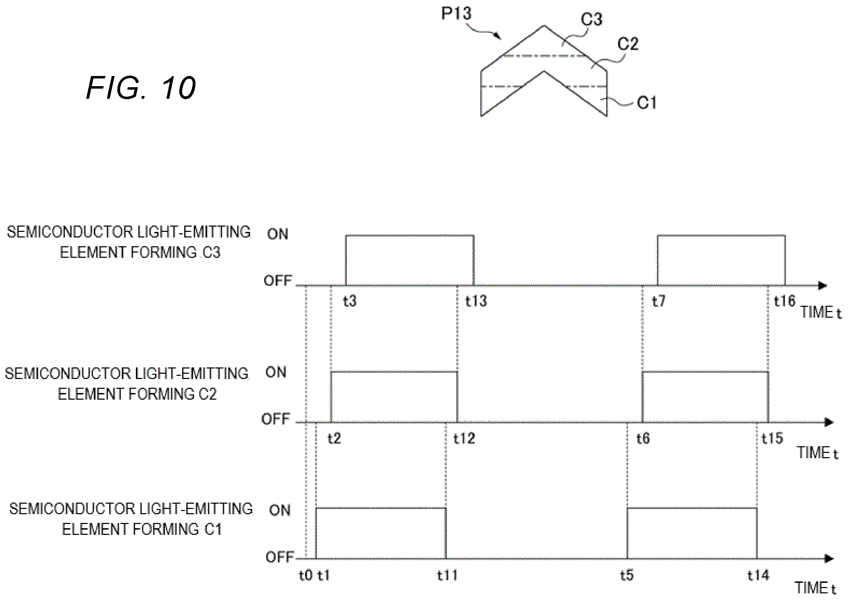

Fig. 10 illustrates turning on and off timings of the semiconductor light-emitting elements of the light source unit 5, which emit light forming the first region P13 of the light pattern P1.

The control unit 7 performs control of turning on and off of the light source unit 5 such that, after the second region C1 located closest to the vehicle 100 is drawn on the road surface, the plurality of remaining second regions C2 and C3 are stepwise drawn on the road surface in order of proximity to the vehicle 100. Note that, since the control of turning on and off of the light source unit 5 is the same as the control of turning on and off of the light source unit 5 illustrated in Fig. 5, a detailed description will be omitted.

The control unit 7 performs control of turning off of the light source unit 5 such that, after all the second regions C1, C2, and C3 are drawn, the drawing of the second region C1 located closest to the vehicle 100 is erased, and then the drawings of the remaining second regions C2 and C3 are erased.

Specifically, as illustrated in the lower part of Fig. 10, the control unit 7 controls the light source unit 5 such that a semiconductor light-emitting element emitting light forming the second region C1 among the plurality of semiconductor light-emitting elements of the light source unit 5 is turned off. Specifically, the control unit 7 turns off, at time t11, a semiconductor light-emitting element forming the second region C1. As a result, the drawing of the second region C1 of the first region P13 is erased simultaneously with the drawings of the second region A1 of the first region P11 and the second region B1 of the first region P12.

Subsequently, the control unit 7 controls the light source unit 5 such that a semiconductor light-emitting element emitting light forming the second region C2 among the plurality of semiconductor light-emitting elements of the light source unit 5 is turned off. Specifically, the control unit 7 turns off, at time t12, a semiconductor light-emitting element emitting light forming the second region C2. As a result, the drawing of the second region C2 of the first region P13 is erased simultaneously with the drawings of the second region A2 of the first region P11 and the second region B2 of the first region P12.

Subsequently, the control unit 7 controls the light source unit 5 such that a semiconductor light-emitting element emitting light forming the second region C3 among the plurality of semiconductor light-emitting elements of the light source unit 5 is turned off. Specifically, the control unit 7 turns off, at time t13, a semiconductor light-emitting element forming the second region C3. As a result, the drawing of the second region C3 of the first region P13 is erased simultaneously with the drawings of the second region A3 of the first region P11 and the second region B3 of the first region P12.

When the drawing of the light pattern P1 is repeated at a predetermined period T1, the erasing of the drawing of the first region P13 is also repeated in the same manner as the first regions P11 and P12.

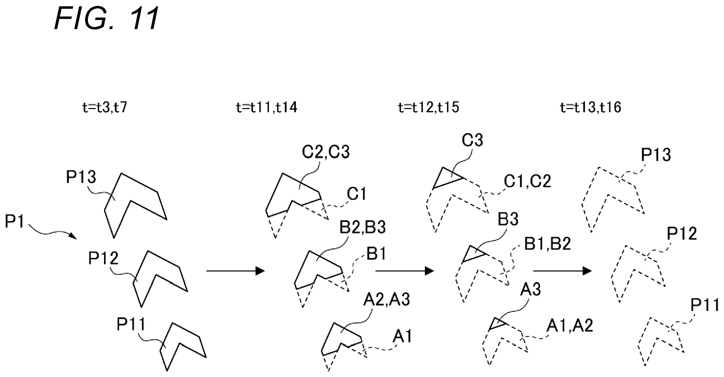

Fig. 11 illustrates an aspect of drawing of the light pattern P1 formed based on the turning on and off timings of the light source unit 5 illustrated in Figs. 8 to 10. In Fig. 11, a region surrounded by a broken line is a region that is not irradiated with light from the road surface drawing device 1 and is not drawn on the road surface, and a region surrounded by a solid line is a region that is irradiated with light from the road surface drawing device 1 and is drawn on the road surface.

As illustrated in Fig. 11, at time t3, all the regions in the first regions P11, P12, and P13 are drawn. Subsequently, at time t11, the drawings of the second regions A1, B1, and C1 located closest to the vehicle 100 in the first regions P11, P12, and P13 are erased.

Subsequently, at time t12, the drawings of the second regions A2, B2, and C2 adjacent to the second regions A1, B1, and C1 in the first regions P11, P12, and P13 are erased. That is, in the light pattern P1, both the drawings of the second regions A1, B1, and C1 and the second regions A2, B2, and C2 in the first regions P11, P12, and P13 are erased.

Subsequently, at time t13, the drawings of the second regions A3, B3, and C3 located farthest from the vehicle 100 in the first regions P11, P12, and P13 are erased. That is, in the light pattern P1, the drawings of all the regions in the first regions P11, P12, and P13 are erased.

In this way, since the drawings of the plurality of second regions in the first regions P11, P12, and P13 are erased stepwise in order of proximity to the vehicle 100, a movement of light corresponding to an operation of the vehicle 100 can be expressed within each of the first regions P11, P12, and P13.

In the above embodiment, the first regions P11, P12, and P13 of the light pattern P1 are each formed in an arrowhead (chevron) shape. However, the first regions P11, P12, and P13 of the light pattern P1 may be formed in shapes different from the arrowhead shape. For example, the first regions P11, P12, and P13 of the light pattern P1 may be formed into polygonal shapes such as triangular shapes or trapezoidal shapes that are convex in a direction to be indicated, elliptical shapes extending in the direction to be indicated, arrow shapes extending in the direction to be indicated, or the like.

In the above embodiment, the light pattern P1 may be drawn so as to appear as a three-dimensional obstacle when viewed from the pedestrian 200.

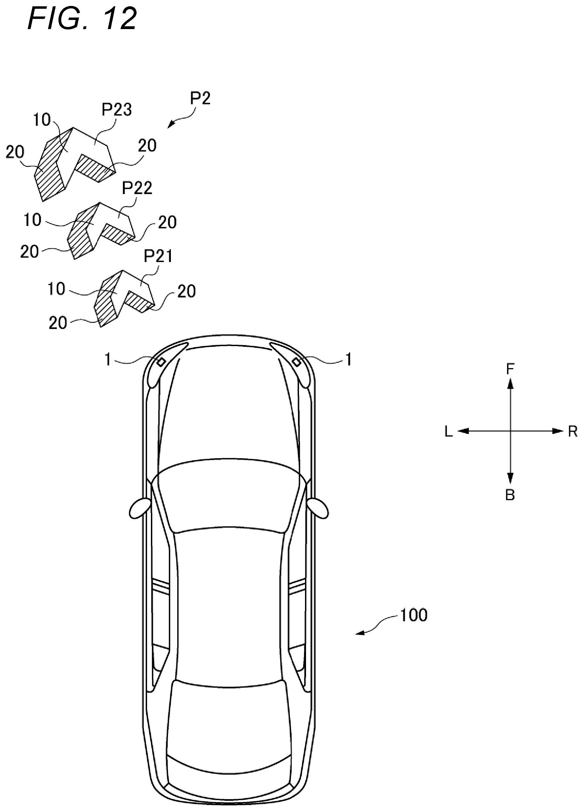

Fig. 12 illustrates a light pattern P2 drawn three-dimensionally on a road surface by the road surface drawing device 1 mounted on the vehicle 100.

As illustrated in Fig. 12, the light pattern P2 is divided into a plurality of first regions in the traveling direction of the vehicle 100. In the present example, the light pattern P2 includes three first regions P21, P22, and P23. The first regions P21, P22, and P23 are divided in the left-forward direction with respect to the vehicle 100. The first region P21 is located closest to the vehicle 100. The first region P23 is located farthest from the vehicle 100. The first region P22 is located between the first region P21 and the first region P23. The first regions P21, P22, and P23 are aligned at intervals along the left-forward direction.

The first regions P21, P22, and P23 each include a bright portion 10 and a dark portion 20. The dark portion 20 has a luminance lower than that of the bright portion 10. For example, the luminance of the dark portion 20 is about 50% of the luminance of the bright portion 10. The control unit 7, for example, turns on a semiconductor light-emitting element that emits light forming the dark portion 20 among the plurality of semiconductor light-emitting elements of the light source unit 5 at an illuminance lower than that of a semiconductor light-emitting element that emits light forming the bright portion 10.

The dark portion 20 is formed so as to extend along at least a part of the bright portion 10. For example, the dark portion 20 is formed such that an outer edge line of the bright portion 10 closer to the pedestrian 200 appears to rise from the road surface. Specifically, the control unit 7 determines positions of the dark portions in the first regions P21, P22, and P23 based on pedestrian information including a position of the pedestrian 200. Note that the pedestrian information may be acquired, for example, from a camera (not shown) mounted on the vehicle 100.

Note that, although detailed description and illustration are omitted, in the present example as well, the control unit 7 controls the light source unit 5 such that, after the second regions A1, B1, and C1 located closest to the vehicle 100 in the plurality of first regions P21, P22, and P23 are each drawn, the remaining second regions A2, A3, B2, B3, C2, and C3 not drawn in the plurality of first regions P21, P22, and P23 are drawn.

In this way, since the first regions P21, P22, and P23 are each formed such that the dark portion 20 extends along at least a part of the bright portion 10, the light pattern P2 appears as a three-dimensional obstacle when viewed from the pedestrian 200. Accordingly, as compared with the light pattern P1 drawn with a uniform luminance, the pedestrian 200 can more easily recognize the light pattern P2. In addition, a feeling of intimidation that the light pattern P2 gives to the pedestrian 200 is also reduced.

### (Second Embodiment)

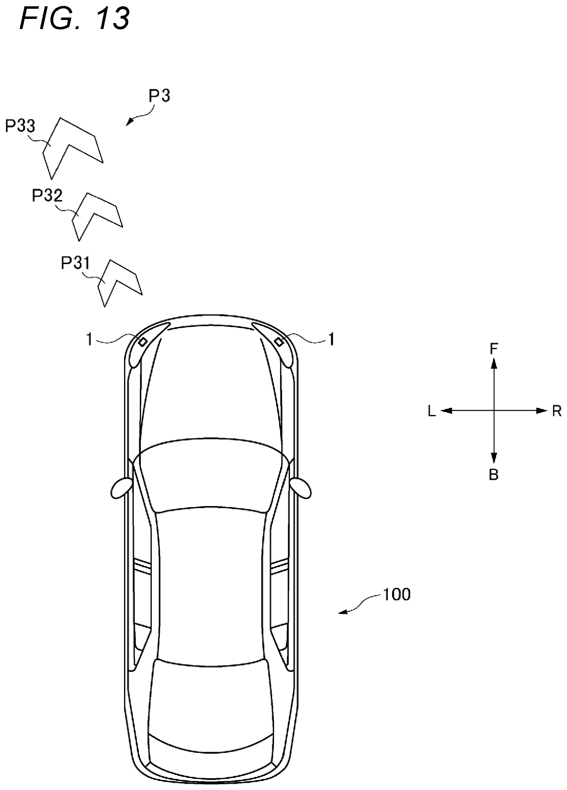

Fig. 13 illustrates a light pattern P3 drawn by the road surface drawing device 1 according to the present embodiment. The road surface drawing device 1 is mounted on the vehicle 100. In the present example, the road surface drawing device 1 is arranged in a lamp chamber of a headlamp of the vehicle 100.

The road surface drawing device 1 is configured to draw a light pattern P3 on a road surface by irradiating light onto the road surface. In the present example, the light pattern P3 is a pattern for notifying surroundings of the vehicle 100 of a leftward lane change of the vehicle 100. The light pattern P3 is, for example, drawn on the road surface while a lamp (not shown) for notifying surroundings of the vehicle 100 of a leftward lane change of the vehicle 100 is lit.

The light pattern P3 is divided into a plurality of regions in a traveling direction of the vehicle 100. In the present example, the light pattern P3 includes a first region P31, a second region P32, and a third region P33. The first region P31, the second region P32, and the third region P33 are divided in the left-forward direction with respect to the vehicle 100. The first region P31 is located closest to the vehicle 100. The third region P33 is located farthest from the vehicle 100. The second region P32 is located between the first region P31 and the third region P33. The first region P31, the second region P32, and the third region P33 are aligned at intervals along the left-forward direction with respect to the vehicle 100. The "left-forward" direction is a direction extending "leftward" and "forward." The first region P31 is an example of a nearest region. The second region P32 is an example of an intermediate region. The third region P33 is an example of a farthest region.

In the present example, the first regions P31, the second region P32, and the third region P33 are each formed in an arrowhead (chevron) shape. The first region P31, the second region P32, and the third region P33 have larger areas as the regions are located farther from the vehicle 100.

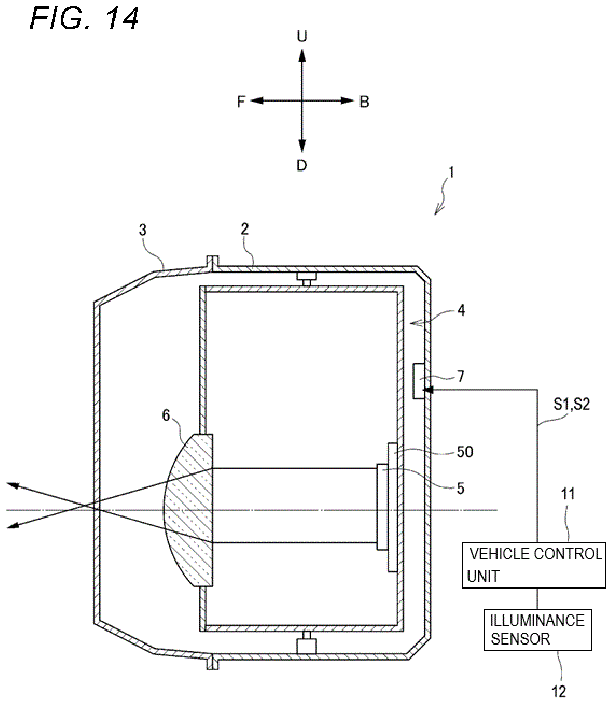

Fig. 14 illustrates a configuration of the road surface drawing device 1. As illustrated in Fig. 14, the road surface drawing device 1 includes a lamp body 2 and an outer cover 3. The lamp body 2 is configured to have an opening at a front side of a lamp. The outer cover 3 is light-transmissive and is configured to cover the opening of the lamp body 2. A lamp chamber 4 is formed by the lamp body 2 and the outer cover 3.

The road surface drawing device 1 includes a light source unit 5, an optical member 6, and a control unit 7. The light source unit 5, the optical member 6, and the control unit 7 are accommodated in the lamp chamber 4.

The light source unit 5 includes, for example, a plurality of semiconductor light-emitting elements (not shown). Examples of the semiconductor light-emitting device include a light-emitting diode (LED) element, a laser diode (LD), and an EL element. The plurality of semiconductor light-emitting elements are arranged in an array form, for example, in up-down and left-right directions on a substrate 50.

The optical member 6 is configured to refract light emitted from the light source unit 5 and emit the light toward a road surface. The optical member 6 is, for example, a planoconvex lens having a front surface that is a convex surface and a rear surface that is a plane surface. The optical member 6 is formed of a light-transmissive material, for example, a transparent resin such as acrylic.

The control unit 7 is configured to individually control turning on and off of a plurality of semiconductor light-emitting elements constituting the light source unit 5. The control unit 7 includes, for example, a microcontroller and an analog drive control circuit. The microcontroller includes a general-purpose microprocessor, such as a CPU, an MPU, or a GPU, and a general-purpose memory, such as a ROM or a RAM. The analog drive control circuit includes a current control circuit configured to control current supplied to each of the plurality of semiconductor light-emitting elements of the light source unit 5. Each of the first region P31, the second region P32, and the third region P33 of the light pattern P3 is formed by light emitted from one or more semiconductor light-emitting elements of the light source unit 5.

The control unit 7 performs control of turning on and off of each semiconductor light-emitting element of the light source unit 5 such that light is irradiated to all of the first region P31, the second region P32, and the third region P33 at the start of drawing of the light pattern P3, and the irradiation of light toward all of the first region P31, the second region P32, and the third region P33 is stopped at the end of drawing of the light pattern P3. In addition, the control unit 7 adjusts a luminance of each semiconductor light-emitting element of the light source unit 5 such that an illuminance of at least the third region P33 of the light pattern P3 is lower than an illuminance of the first region P31 at the start of drawing of the light pattern P3, and increases as the drawing time elapses.

For example, when a dimming method for the semiconductor light-emitting element is analog dimming, the control unit 7 adjusts a direct-current level of a drive current flowing through the semiconductor light-emitting element. For example, when a dimming method for the semiconductor light-emitting element is PWM (Pulse Width Modulation) dimming, the control unit 7 switches a drive current flowing through the semiconductor light-emitting element to adjust a ratio of an on-period, thereby adjusting an average level of the drive current.

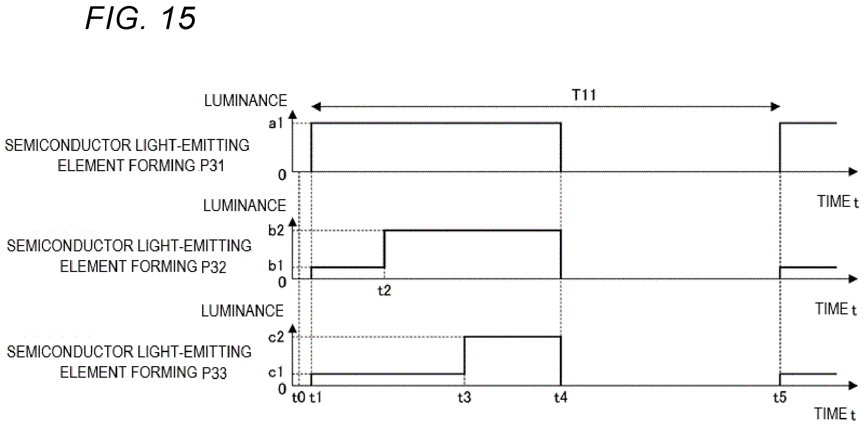

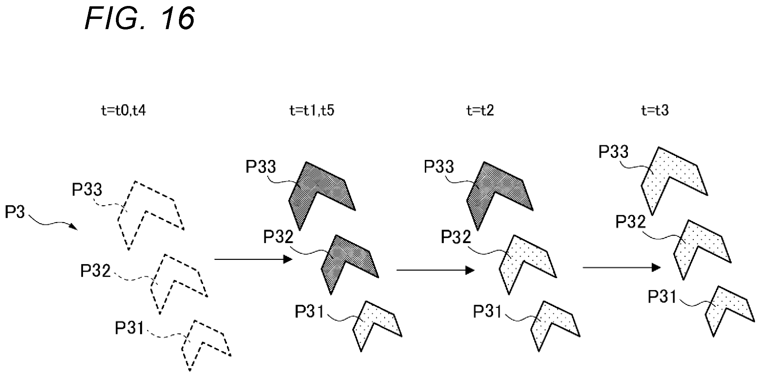

In the following, the control of turning on and off of the light source unit 5 by the control unit 7 according to the present embodiment will be described in detail with reference to Figs. 15 and 16. Fig. 15 illustrates a time chart showing turning on and off of semiconductor light-emitting elements of the light source unit 5. In Fig. 15, a horizontal axis represents time, and a vertical axis represents a luminance value of a semiconductor light-emitting element of the light source unit 5.

For example, when the control unit 7 receives a signal S1, which determines a leftward lane change of the vehicle 100, from a vehicle control unit 11 that controls traveling of the vehicle 100 as illustrated in Fig. 14, the control unit 7 performs control of turning on and off of the light source unit 5 such that the light pattern P3 is repeatedly drawn at a predetermined period T11 based on the signal S1, as illustrated in Fig. 15. For example, the period T11 is set to be the same as a blinking period of a lamp for notifying surroundings of the vehicle 100 of a leftward lane change of the vehicle 100. Specifically, the period T11 is set to, for example, about 0.5 seconds to 1.0 second.

In addition, the control unit 7 performs control of turning on and off of the semiconductor light-emitting elements of the light source unit 5 such that an illuminance of the second region P32 and an illuminance of the third region P33 are lower than an illuminance of the first region P31 at the start of drawing of the light pattern P3, and increase as the drawing time elapses.

Specifically, as illustrated in Fig. 15, when drawing of the light pattern P3 is started at time t1, the control unit 7 turns on, at time t1, semiconductor light-emitting elements that emit light forming the first region P31, the second region P32, and the third region P33.

In addition, the control unit 7 sets luminances of the semiconductor light-emitting elements of the light source unit 5 such that the illuminance of the second region P32 and the illuminance of the third region P33 at the start of drawing are each lower than the illuminance of the first region P31.

For example, a luminance a1 of the semiconductor light-emitting element that emits light forming the first region P31, a luminance b1 of the semiconductor light-emitting element that emits light forming the second region P32, and a luminance c1 of the semiconductor light-emitting element that emits light forming the third region P33 are each set such that the illuminance of the second region P32 and the illuminance of the third region P33 are about 10% of the illuminance of the first region P31.

Subsequently, the control unit 7 changes the luminance of the semiconductor light-emitting element emitting light forming the second region P32 and the luminance of the semiconductor light-emitting element emitting light forming the third region P33 such that the illuminance of the second region P32 and the illuminance of the third region P33 increase as the drawing time of the light pattern P3 elapses.

In the present example, as illustrated in Fig. 15, the control unit 7 first changes the luminance of the semiconductor light-emitting element emitting light forming the second region P32 such that the illuminance of the second region P32 increases. Specifically, the control unit 7 changes, at time t2, the luminance of the semiconductor light-emitting element of the light source unit 5 emitting light forming the second region P32 from b1 to b2 such that the illuminance of the second region P32 becomes the same as the illuminance of the first region P31. Time t2 may be set, for example, to about 0.05 seconds to 0.1 seconds after time t1.

Subsequently, the control unit 7 changes, at time t3, the luminance of the semiconductor light-emitting element of the light source unit 5 emitting light forming the third region P33 from c1 to c2 such that the illuminance of the third region P33 becomes the same as the illuminance of the first region P31. Time t3 may be set, for example, to about 0.05 seconds to 0.1 seconds after time t2.

Then, at time t4 at which the drawing of the light pattern P3 is ended, the control unit 7 simultaneously turns off the plurality of semiconductor light-emitting elements emitting light forming the first region P1, the second region P32, and the third region P33. For example, time t4 may be set to about 0.05 to 0.8 seconds after time t3.

The light pattern P3 is repeatedly drawn at a predetermined period T11. That is, as illustrated in Fig. 15, at time t5 at which the period T11 has elapsed from time t1, the control unit 7 starts drawing of the light pattern P3 by turning on the semiconductor light-emitting elements that emit light forming the first region P31, the second region P32, and the third region P33. The control unit 7 repeats drawing of the light pattern P3 until a signal to stop drawing of the light pattern P3 is received from the vehicle control unit 11, for example.

Fig. 16 illustrates an aspect of drawing of the light pattern P3 formed based on the turning on and off of the light source unit 5 illustrated in Fig. 15. In Fig. 16, a region surrounded by a broken line is a region that is not irradiated with light from the road surface drawing device 1 and is not drawn on the road surface, and a region surrounded by a solid line is a region that is irradiated with light from the road surface drawing device 1 and is drawn on the road surface. In addition, in Fig. 16, illuminances of respective regions are represented by differences in hatching provided within the regions surrounded by the solid lines. Specifically, a region with a higher illuminance is represented by light hatching, and a region with a lower illuminance is represented by dark hatching.

As illustrated in Fig. 16, at time t0 (see Fig. 15) at which the drawing of the light pattern P3 has not been started, light is not irradiated from the road drawing device 1, and thus the light pattern P3 is not drawn. Then, at time t1 at which drawing of the light pattern P3 is started, light emitted from the light source unit 5 is irradiated to the first region P31, the second region P32, and the third region P33 of the light pattern P3, so that the light pattern P3, in which the illuminance of the second region P32 and the illuminance of the third region P33 are lower than the illuminance of the first region P31, is drawn on the road surface.

Subsequently, at time t2, the light pattern P3 drawn on the road surface changes into a light pattern in which the illuminance of the second region P32 is the same as the illuminance of the first region P31.

Subsequently, at time t3, the light pattern P3 drawn on the road surface changes into a light pattern in which the illuminance of the third region P33 is the same as the illuminance of the first region P31 and the illuminance of the second region P32.

Then, at time t4 at which the drawing of the light pattern P3 is ended, the irradiation of light to the first region P31, the second region P32, and the third region P33 is stopped, so that the drawings of the first region P31, the second region P32, and the third region P33 are erased.

Incidentally, when the light pattern P3 is blinked with a uniform illuminance, there is a case in which a traffic participant such as a pedestrian around the vehicle 100 may have difficulty grasping a traveling direction of the vehicle 100 (for example, a direction in which the vehicle 100 changes lanes) as expressed by the light pattern P3. As a method for expressing the traveling direction of the vehicle 100, it is also conceivable to draw the light pattern P3 in which an irradiation region of the light pattern P3 is stepwise changed by irradiating light sequentially from the first region P31 toward the third region P33. However, in such a method for drawing a light pattern, for example, when an obstacle such as a wall is present between the first region P31 and a pedestrian located far from the vehicle 100, there is a risk that the pedestrian cannot visually recognize the first region P31 and a timing at which the light pattern P3 is recognized may be delayed.

In contrast, according to the road surface drawing device 1 of the present embodiment, since all of the first region P31, the second region P32, and the third region P33 constituting the light pattern P3 are drawn simultaneously, even traffic participants located far from the vehicle 100 can quickly recognize the light pattern P3. In addition, since the illuminance of the second region P32 and the illuminance of the third region P33 increase as the drawing time elapses, the light pattern P3 changes such that the illuminance increases from regions closer to the vehicle 100 as the drawing time elapses. Accordingly, traffic participants around the vehicle 100 can be caused to recognize as if an irradiation region of the light pattern P3 were drawn so as to increase stepwise from the first region P31 toward the third region P33. Therefore, the traveling direction of the vehicle can be quickly conveyed to traffic participants around the vehicle 100.

### (Variation 1)

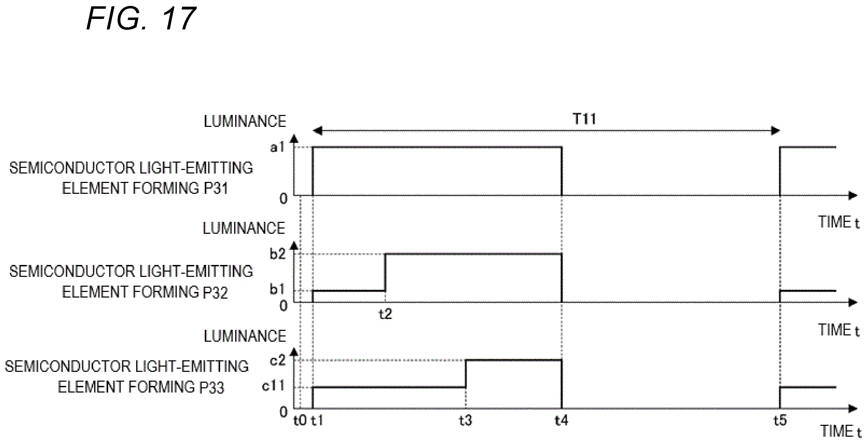

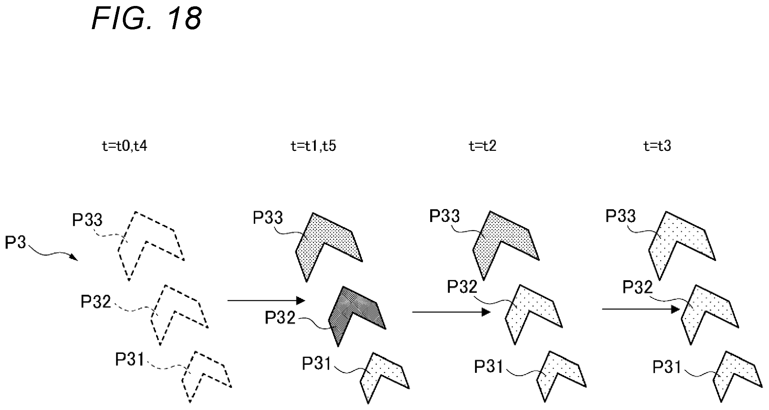

Next, the control of turning on and off of the light source unit 5 by the control unit 7 according to Variation 1 will be described with reference to Figs. 17 and 18. Fig. 17 illustrates a time chart showing turning on and off of semiconductor light-emitting elements of the light source unit 5 according to Variation 1. In Fig. 17, a horizontal axis represents time, and a vertical axis represents a luminance value of a semiconductor light-emitting element of the light source unit 5. Note that, in the present variation, a detailed description of the same control as the control of turning on and off of the light source unit 5 illustrated in Fig. 15 will be omitted.

As illustrated in Fig. 17, the control unit 7 of Variation 1 sets the luminance of each semiconductor light-emitting element of the light source unit 5 such that the illuminance of the third region P33 at time t1 at which drawing of the light pattern P3 is started is higher than the illuminance of the second region P32.

For example, a luminance a1 of the semiconductor light-emitting element that emits light forming the first region P31, a luminance b1 of the semiconductor light-emitting element that emits light forming the second region P32, and a luminance c11 of the semiconductor light-emitting element that emits light forming the third region P33 are each set such that the illuminance of the second region P32 becomes about 10% of the illuminance of the first region P31, and the illuminance of the third region P33 becomes about 40% of the illuminance of the first region P31.

Fig. 18 illustrates an aspect of drawing of the light pattern P3 formed based on the turning on and off of the light source unit 5 illustrated in Fig. 17. Fig. 18, similarly to Fig. 16, represents drawing and illuminance of each of the first region P31, the second region P32, and the third region P33 of the light pattern P3 by broken lines, solid lines, and hatching.

As illustrated in Fig. 18, at time t0 (see Fig. 17) at which the drawing of the light pattern P3 has not been started, light is not irradiated from the road drawing device 1, and thus the light pattern P3 is not drawn. Then, at time t1 at which drawing of the light pattern P3 is started, light emitted from the light source unit 5 is irradiated to the first region P31, the second region P32, and the third region P33 of the light pattern P3, so that the light pattern P3, in which the illuminance of the third region P33 is lower than the illuminance of the first region P31 and higher than the illuminance of the second region P32, is drawn on the road surface.

Subsequently, at time t2, the light pattern P3 drawn on the road surface changes into a light pattern in which the illuminance of the second region P32 is the same as the illuminance of the first region P31. Subsequently, at time t3, the light pattern P3 drawn on the road surface changes into a light pattern in which the illuminance of the third region P33 is the same as the illuminance of the first region P31 and the illuminance of the second region P32. Then, at time t4 at which the drawing of the light pattern P3 is ended, the irradiation of light to the first region P31, the second region P32, and the third region P33 is stopped, so that the drawings of the first region P31, the second region P32, and the third region P33 are erased.

According to such a configuration, since the illuminance of the third region P33 farthest from the vehicle 100 is relatively high, traffic participants located far from the vehicle 100 can more easily recognize the light pattern P3.

### (Variation 2)

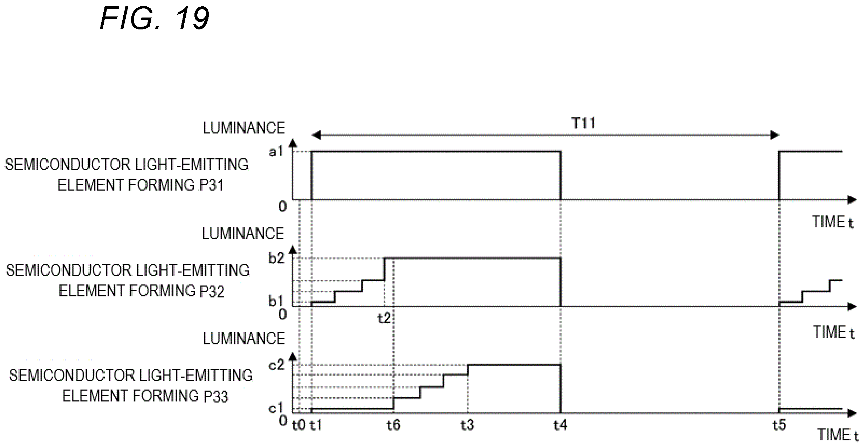

Next, the control of turning on and off of the light source unit 5 by the control unit 7 according to Variation 2 will be described with reference to Fig. 19. Fig. 19 illustrates a time chart showing turning on and off of semiconductor light-emitting elements of the light source unit 5 according to Variation 2. In Fig. 19, a horizontal axis represents time, and a vertical axis represents a luminance value of a semiconductor light-emitting element of the light source unit 5. Note that, in the present variation, a detailed description of the same control as the control of turning on and off of the light source unit 5 illustrated in Fig. 15 will be omitted.

As illustrated in Fig. 19, the control unit 7 of Variation 2 adjusts the luminance of each semiconductor light-emitting element of the light source unit 5 such that the illuminance of the second region P32 and the illuminance of the third region P33 each increase in a stepwise manner as the drawing time elapses.

Specifically, the control unit 7 adjusts the luminance of the semiconductor light-emitting element of the light source unit 5 that irradiates light forming the second region P32 such that the illuminance of the second region P32 of the light pattern P3 increases in a stepwise manner as the drawing time elapses from time t1 to time t2. Note that a timing at which the illuminance of the second region P32 increases and an amount of increase thereof may be set as appropriate.

Subsequently, the control unit 7 adjusts the luminance of the semiconductor light-emitting element of the light source unit 5 that irradiates light forming the third region P33 such that the illuminance of the third region P33 of the light pattern P3 increases in a stepwise manner as the drawing time elapses from time t6 after time t2 elapses to time t3.

For example, time t6 may be set to about 0.05 seconds to 0.1 seconds after time t2. A timing at which the illuminance of the third region P33 increases and an amount of increase thereof may be set as appropriate.

According to such a configuration, the light pattern P3 having an illuminance change different from an illuminance change of the light pattern P3 illustrated in Fig. 16 can be formed. In addition, compared with gradually changing the illuminance of each of the second region P32 and the third region P33, changing the illuminance in a stepwise manner increases a difference in illuminance before and after the change, and thus traffic participants can more easily recognize that the illuminance of the light pattern P3 has changed.

### (Variation 3)

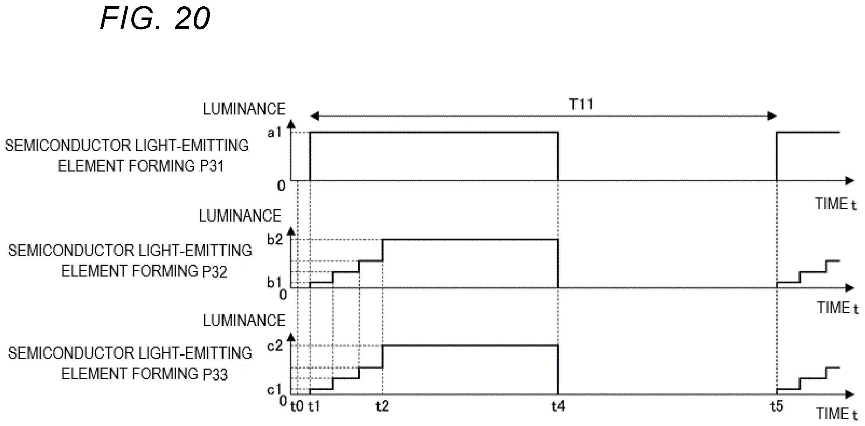

Next, the control of turning on and off of the light source unit 5 by the control unit 7 according to Variation 3 will be described with reference to Fig. 20. Fig. 20 illustrates a time chart showing turning on and off of semiconductor light-emitting elements of the light source unit 5 according to Variation 3. In Fig. 20, a horizontal axis represents time, and a vertical axis represents a luminance value of a semiconductor light-emitting element of the light source unit 5. Note that, in the present variation, a detailed description of the same control as the control of turning on and off of the light source unit 5 illustrated in Figs. 15 and 19 will be omitted.

As illustrated in Fig. 20, the control unit 7 of Variation 3 adjusts the luminance of each semiconductor light-emitting element of the light source unit 5 such that the illuminance of the second region P32 and the illuminance of the third region P33 increase in a stepwise manner at the same timing as the drawing time elapses.

Specifically, the control unit 7 adjusts the luminance of the semiconductor light-emitting element of the light source unit 5 that irradiates light forming the second region P32 such that the illuminance of the second region P32 of the light pattern P3 increases in a stepwise manner as the drawing time elapses from time t1 to time t2. Note that a timing at which the illuminance of the second region P32 increases and an amount of increase thereof may be set as appropriate.

In addition, the control unit 7 adjusts the luminance of the semiconductor light-emitting element of the light source unit 5 that irradiates light forming the third region P33 such that the illuminance of the third region P33 of the light pattern P3 increases in a stepwise manner as the drawing time elapses from time t1 to time t2. The timing at which the illuminance of the third region P33 increases is set to be the same as the timing at which the illuminance of the second region P32 increases. The amount of increase in illuminance of the third region P33 may be set to be the same as the amount of increase in illuminance of the second region P32, or may be set to be smaller than the amount of increase in illuminance of the second region P32.

According to such a configuration, since the illuminance of the third region P33 farthest from the vehicle 100 changes immediately after the start of drawing, a pedestrian located far from the vehicle 100 can also recognize the change in the light pattern P3 from an early stage.

### (Variation 4)

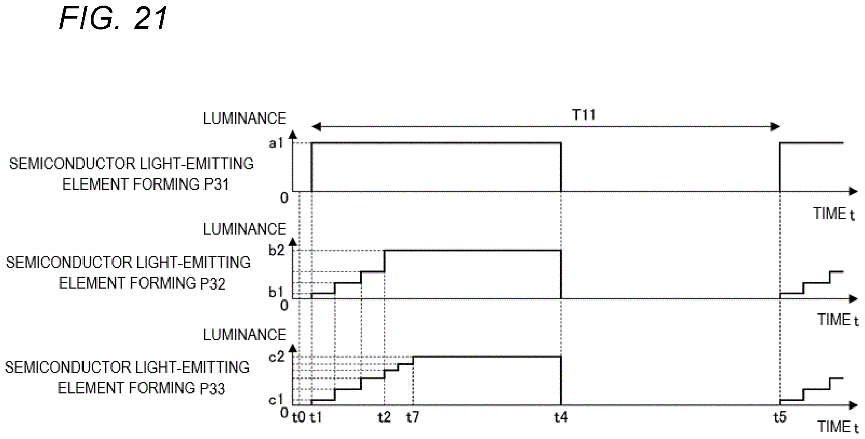

Next, the control of turning on and off of the light source unit 5 by the control unit 7 according to Variation 4 will be described with reference to Fig. 21. Fig. 21 illustrates a time chart showing turning on and off of semiconductor light-emitting elements of the light source unit 5 according to Variation 4. In Fig. 21, a horizontal axis represents time, and a vertical axis represents a luminance value of a semiconductor light-emitting element of the light source unit 5. Note that, in the present variation, a detailed description of the same control as the control of turning on and off of the light source unit 5 illustrated in Fig. 20 will be omitted.

As illustrated in Fig. 21, the control unit 7 of Variation 4 adjusts the luminance of each semiconductor light-emitting element of the light source unit 5 such that the illuminance of the second region P32 and the illuminance of the third region P33 increase in a stepwise manner at the same timing as the drawing time elapses, and such that the illuminance of the third region P33 becomes equal to the illuminance of the first region P31 after the illuminance of the second region P32 becomes equal to the illuminance of the first region P31.

Specifically, the control unit 7 adjusts the luminance of the semiconductor light-emitting element of the light source unit 5 that irradiates light forming the second region P32 such that the illuminance of the second region P32 of the light pattern P3 increases in a stepwise manner as the drawing time elapses from time t1 to time t2. Note that a timing at which the illuminance of the second region P32 increases and an amount of increase thereof may be set as appropriate.

In addition, the control unit 7 adjusts the luminance of the semiconductor light-emitting element of the light source unit 5 that irradiates light forming the third region P33 such that the illuminance of the third region P33 of the light pattern P3 increases in a stepwise manner as the drawing time elapses from time t1 to time t7 after time t2 elapses, and becomes equal to the illuminance of the first region P31 at time t7. For example, time t7 may be set to about 0.05 seconds to 0.1 seconds after time t2. The timing at which the illuminance of the third region P33 increases is set to be the same as the timing at which the illuminance of the second region P32 increases, from time t1 to time t2. The timing at which the illuminance of the third region P33 increases from time t2 to time t7 or the amount of increase in illuminance of the third region P33 may be appropriately set.

According to such a configuration, since the light pattern P3 changes such that the illuminance increases from regions closer to the vehicle 100 as the drawing time elapses, traffic participants around the vehicle 100 can be caused to recognize as if an irradiation region of the light pattern P3 were drawn so as to increase stepwise from the first region P31 toward the third region P33.

### (Variation 5)

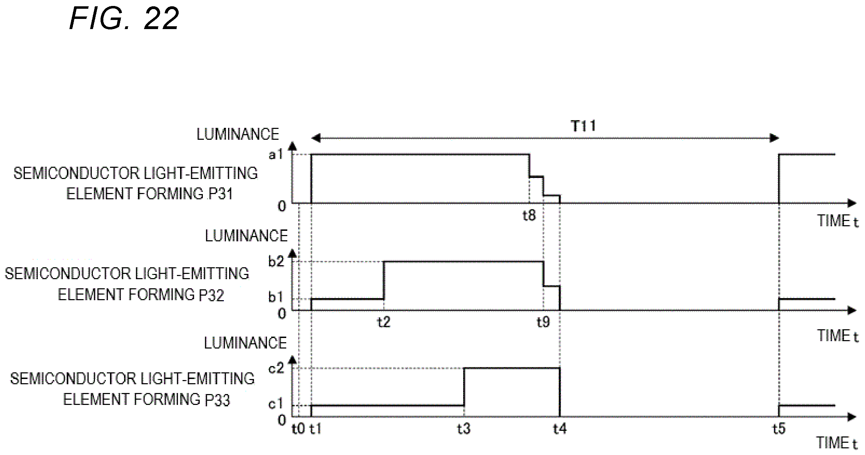

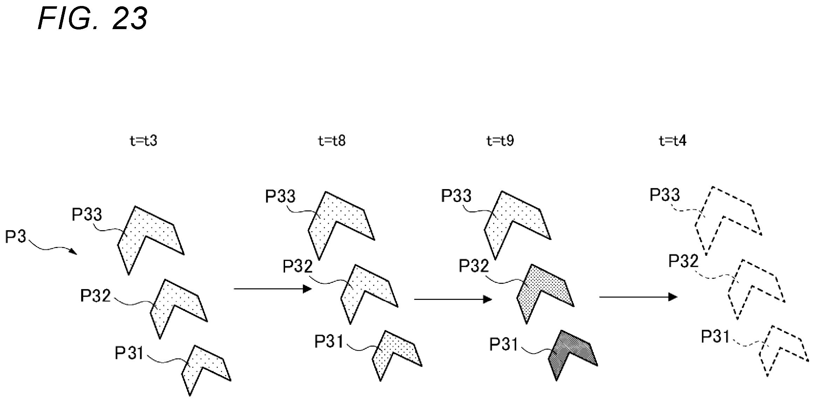

Next, the control of turning on and off of the light source unit 5 by the control unit 7 according to Variation 5 will be described with reference to Figs. 22 and 23. Fig. 22 illustrates a time chart showing turning on and off of semiconductor light-emitting elements of the light source unit 5 according to Variation 5. In Fig. 22, a horizontal axis represents time, and a vertical axis represents a luminance value of a semiconductor light-emitting element of the light source unit 5. Note that, in the present variation, a detailed description of the same control as the control of turning on and off of the light source unit 5 illustrated in Fig. 15 will be omitted.

The control unit 7 of Variation 5 is configured such that the illuminance of at least the first region P31 of the light pattern P3 decreases as the drawing time elapses, and when the drawing of the light pattern P3 is ended, the irradiation of light toward all of the first region P31, the second region P32, and the third region P33 is stopped.

Specifically, as illustrated in Fig. 22, the control unit 7 adjusts the luminance of the semiconductor light-emitting element of the light source unit 5 that irradiates light forming the first region P31 such that the illuminance of the first region P31 of the light pattern P3 decreases in a stepwise manner as the drawing time elapses from time t8 to time t4 at which the drawing of the light pattern P3 is ended. For example, time t8 may be set to about 0.1 seconds to 0.5 seconds before time t4. A timing at which the illuminance of the first region P31 decreases and an amount of decrease thereof may be set as appropriate.

In addition, the control unit 7 adjusts the luminance of the semiconductor light-emitting element of the light source unit 5 that irradiates light forming the second region P32 such that the illuminance of the second region P32 of the light pattern P3 decreases in a stepwise manner as the drawing time elapses from time t9 after time t8 elapses to time t4 at which the drawing of the light pattern P3 is ended. For example, time t9 may be set to about 0.4 seconds to 0.05 seconds before time t4.

The timing at which the illuminance of the second region P32 decreases is set to be the same as the timing at which the illuminance of the first region P31 decreases. That is, at time t9, the illuminance of the second region P32 decreases together with the illuminance of the first region P31. An amount of decrease in illuminance of the second region P32 may be set as appropriate. For example, the amount of decrease in illuminance of the second region P32 may be set such that the illuminance of the second region P32 at time t9 is higher than the illuminance of the first region P31, or the amount of decrease in illuminance of the second region P32 may be set such that the illuminance of the second region P32 at time t9 is the same as the illuminance of the first region P31.

Fig. 23 illustrates an aspect of the light pattern P3 whose drawing is erased based on the turning on and off of the light source unit 5 illustrated in Fig. 22. Fig. 22, similarly to Fig. 16, represents drawing and illuminance of each of the first region P31, the second region P32, and the third region P33 of the light pattern P3 by broken lines, solid lines, and hatching.

As illustrated in Fig. 23, at time t3, in the light pattern P3, all illuminances of the first region P31, the second region P32, and the third region P33 become equal. Then, at time t8, the light pattern P3 drawn on the road surface changes into a light pattern in which the illuminance of the first region P31 is lower than the illuminance of the second region P32 and the illuminance of the third region P33.

Subsequently, at time t9, the light pattern P3 drawn on the road surface changes into a light pattern in which the illuminance of the second region P32 is lower than the illuminance of the third region P33, and the illuminance of the first region P31 is lower than the illuminance of the second region P32. Then, at time t4 at which the drawing of the light pattern P3 is ended, the irradiation of light to the first region P31, the second region P32, and the third region P33 is stopped, so that the drawings of the first region P31, the second region P32, and the third region P33 are erased.

According to such a configuration, since the illuminances of the first region P31 and the second region P32 decrease together as the drawing time elapses, the light pattern P3 changes such that the illuminance decreases from regions closer to the vehicle 100 as the drawing time elapses. Accordingly, traffic participants around the vehicle 100 can be caused to recognize as if an irradiation region of the light pattern P3 were drawn so as to decrease stepwise from the first region P31 toward the third region P33.

In addition, since the illuminance of the first region P31 and the illuminance of the second region P32 decrease in a stepwise manner as the drawing time elapses, a difference in illuminance before and after the change becomes larger than in a case where the illuminance of the first region P31 and the illuminance of the second region P32 are gradually changed, and thus traffic participants can easily recognize that the illuminance of the light pattern P3 has changed.

### (Variation 6)

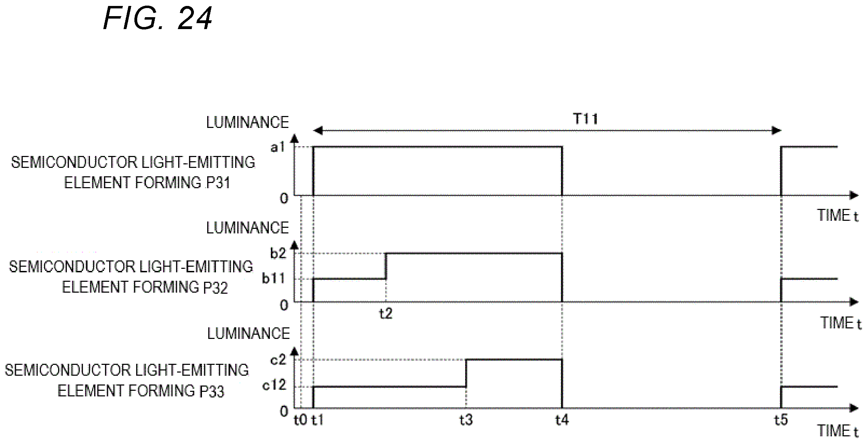

Next, the control of turning on and off of the light source unit 5 by the control unit 7 according to Variation 6 will be described with reference to Figs. 14 and 24. Note that, in the present variation, a detailed description of the same control as the control of turning on and off of the light source unit 5 illustrated in Fig. 15 will be omitted.

The control unit 7 of Variation 6 sets the luminance of each semiconductor light-emitting element of the light source unit 5 such that the illuminance of the second region P32 and the illuminance of the third region P33 at the start of drawing change in accordance with an ambient illuminance around the vehicle 100.

Specifically, as illustrated in Fig. 14, an illuminance sensor 12 is connected to the vehicle control unit 11. The illuminance sensor 12 is mounted on the vehicle 100 and is configured to detect an ambient illuminance around the vehicle 100. Note that the illuminance sensor 12 may be directly connected to the control unit 7.

The control unit 7 receives, from the vehicle control unit 11, a signal S2 regarding the ambient illuminance around the vehicle 100 detected by the illuminance sensor 12, and sets, based on the signal S2, the luminances of the semiconductor light-emitting elements that irradiate light forming the second region P32 and the third region P33 at the start of drawing.

For example, the control unit 7 sets the luminances of the semiconductor light-emitting elements forming the second region P32 and the third region P33 such that the illuminance of the second region P32 and the illuminance of the third region P33 at the start of drawing when the ambient illuminance around the vehicle 100 is high are higher than the illuminance of the second region P32 and the illuminance of the third region P33 at the start of drawing when the ambient illuminance around the vehicle 100 is low. For example, a case in which the ambient illuminance around the vehicle 100 is high is at sunset, and a case in which the ambient illuminance around the vehicle 100 is low is at night.

Fig. 24 illustrates a time chart showing turning on and off of semiconductor light-emitting elements of the light source unit 5 when the ambient illuminance around the vehicle 100 is high. In Fig. 24, a horizontal axis represents time, and a vertical axis represents a luminance value of a semiconductor light-emitting element of the light source unit 5.

The illuminance of the second region P32 and the illuminance of the third region P33 at the start of drawing in Fig. 24 are set higher than the illuminance of the second region P32 and the illuminance of the third region P33 at the start of drawing in Fig. 15.

For example, a luminance a1 of the semiconductor light-emitting element that emits light forming the first region P31, a luminance b11 of the semiconductor light-emitting element that emits light forming the second region P32, and a luminance c12 of the semiconductor light-emitting element that emits light forming the third region P33 are each set such that the illuminance of the second region P32 and the illuminance of the third region P33 at the start of drawing become from about 40% to about 50% of the illuminance of the first region P31.

When the ambient illuminance around the vehicle 100 is high, the control unit 7 controls the light source unit 5 based on the control of turning on and off illustrated in Fig. 24. When the ambient illuminance around the vehicle 100 is low, the control unit 7 controls the light source unit 5 based on the control of turning on and off illustrated in Fig. 15.

Incidentally, when the illuminance of the second region P32 and the illuminance of the third region P33 at the start of drawing are fixed, since the second region P32 and the third region P33 each have a low illuminance, the second region P32 and the third region P33 of the light pattern P3 become less visible at sunset, when an ambient illuminance around the vehicle 100 is high, than at night, when the ambient illuminance around the vehicle 100 is low.

In contrast, according to the road surface drawing device 1 of Variation 6, the illuminance of the second region P32 and the illuminance of the third region P33 at the start of drawing are changed in accordance with the ambient illuminance around the vehicle 100. For example, the illuminance of the second region P32 and the illuminance of the third region P33 at the start of drawing in the light pattern P3 drawn at sunset, when the ambient illuminance is high, are set to be higher than the illuminance of the second region P32 and the illuminance of the third region P33 at the start of drawing in the light pattern P3 drawn at night, when the ambient illuminance is low. Accordingly, reduced visibility of the light pattern P3 due to the ambient illuminance around the vehicle 100 is improved.

Note that, in the present example, the control unit 7 determines the ambient illuminance around the vehicle 100 based on the detection value of the illuminance sensor. However, the control unit 7 may be configured to estimate the ambient illuminance around the vehicle 100 from, for example, sunset time information, weather information, current time information, current location information, and the like acquired by a wireless communication unit (not illustrated) mounted on the vehicle 100. Alternatively, the control unit 7 may acquire operation information regarding a headlamp that is controlled in accordance with, for example, the ambient illuminance around the vehicle 100, and may determine the ambient illuminance around the vehicle 100 from the information.

In the second embodiment and variations described above, the first region P31, the second region P32, and the third region P33 of the light pattern P3 are each formed in an arrowhead (chevron) shape. However, the first region P31, the second region P32, and the third region P33 of the light pattern P3 may each be formed in a shape different from the arrowhead shape. For example, the first region P31, the second region P32, and the third region P33 of the light pattern P3 may be formed into polygonal shapes such as triangular shapes or trapezoidal shapes that are convex in a direction to be indicated, elliptical shapes extending in the direction to be indicated, arrow shapes extending in the direction to be indicated, or the like.

In the second embodiment and variations described above, the control of turning on and off of the light source unit 5 is performed such that the illuminance of the second region P32, together with the illuminance of the third region P33, is also lower than the illuminance of the first region P31 at the start of drawing of the light pattern P3, and increases as the drawing time elapses. However, the control of turning on and off of the light source unit 5 may be performed such that the illuminance of the second region P32 is the same as the illuminance of the first region P31 and remains constant while the light pattern P3 is being drawn.

In the second embodiment and variations described above, the light pattern P3 is divided into three regions of the first region P31, the second region P32, and the third region P33. However, the light pattern P3 may be divided into two regions, or four or more regions.

In the above, the present disclosure has been described based on the embodiments. The embodiments are examples of the present disclosure, the present disclosure is not limited to the embodiments described above, and various modifications and improvements can be freely made as appropriate. In addition, the material, shape, dimension, numerical value, form, number, arrangement location, and the like of each constitutional element in the embodiments described above are arbitrary and are not particularly limited as long as the present disclosure can be achieved.

In the first embodiment, the second embodiment, and the variations described above, the road surface drawing device 1 is arranged in the lamp chamber of the headlamp of the vehicle 100. However, the road surface drawing device 1 may be arranged at a location other than the lamp chamber of the headlamp at a front portion of the vehicle 100. Additionally, the road surface drawing device 1 may be arranged at a rear portion of the vehicle 100. For example, the road surface drawing device 1 may be arranged in a lamp chamber of a rear combination lamp of the vehicle 100. When the road surface drawing device 1 is arranged at the rear portion of the vehicle 100, the road surface drawing device 1 may be configured, for example, to draw a light pattern on a road surface for notifying surroundings of the vehicle 100 of reversing of the vehicle 100. As the light pattern for notifying surroundings of the vehicle 100 of reversing of the vehicle 100, for example, the light pattern may be formed to have a plurality of rectangular regions.

The configurations listed below also constitute part of the present disclosure.
(1) A road surface drawing device mounted on a vehicle and configured to draw a light pattern on a road surface, wherein
   the light pattern is divided into a plurality of first regions in a traveling direction of the vehicle,
   the first regions are further divided into a plurality of second regions in the traveling direction of the vehicle, and
   after the second regions located closest to the vehicle in the plurality of first regions are each drawn, remaining second regions not drawn in the plurality of first regions are drawn.
(2) The road surface drawing device according to the above (1), wherein the first regions are each divided into three or more second regions, and
   after the second regions located closest to the vehicle in the plurality of first regions are each drawn, the plurality of remaining second regions not drawn in the plurality of first regions are drawn stepwise in order of proximity to the vehicle.
(3) The road surface drawing device according to the above (1) or (2), wherein the first region includes
   a bright portion, and
   a dark portion formed to extend along at least a part of the bright portion and having a luminance lower than that of the bright portion.
(4) The road surface drawing device according to any one of the above (1) to (3), wherein, after the drawings of the second regions located closest to the vehicle in the plurality of first regions are each erased, the drawings of the remaining drawn second regions in the plurality of first regions are erased.
(5) A road surface drawing device mounted on a vehicle and configured to draw a light pattern on a road surface, wherein
   the light pattern is divided into a plurality of regions in a traveling direction of the vehicle,
   light is irradiated to all the regions at a start of drawing of the light pattern, and
   at the start of the drawing, an illuminance of a farthest region located farthest from the vehicle is lower than an illuminance of a nearest region located closest to the vehicle, and the illuminance of the farthest region increases as a drawing time of the light pattern elapses.
(6) The road surface drawing device according to the above (5), wherein the light pattern is divided into the nearest region, the farthest region, and an intermediate region located between the nearest region and the farthest region, and
   at the start of the drawing, the illuminance of the farthest region is lower than that of the nearest region and higher than that of the intermediate region.
(7) The road surface drawing device according to the above (5) or (6), wherein the illuminance of the farthest region at the start of the drawing changes in accordance with an ambient illuminance around the vehicle.
(8) The road surface drawing device according to any one of the above (5) to (7), wherein the illuminance of the nearest region decreases as the drawing time elapses, and the irradiation of light to all the regions is stopped at an end of the drawing.
(9) The road surface drawing device according to any one of the above (5) to (8), wherein the illuminance of the farthest region increases in a stepwise manner as the drawing time elapses.
(10) The road surface drawing device according to the above (8), wherein the illuminance of the nearest region decreases in a stepwise manner as the drawing time elapses.

The present application is based on Japanese Patent Application No. 2023-199093 filed on November 24, 2023, and Japanese Patent Application No. 2023-199094 filed on November 24, 2023, the contents of which are incorporated herein by reference.

## Claims

1. A road surface drawing device mounted on a vehicle and configured to draw a light pattern on a road surface, wherein
the light pattern is divided into a plurality of first regions in a traveling direction of the vehicle,
the first regions are further divided into a plurality of second regions in the traveling direction of the vehicle, and
after the second regions located closest to the vehicle in the plurality of first regions are each drawn, remaining second regions not drawn in the plurality of first regions are drawn.

2. The road surface drawing device according to claim 1, wherein the first regions are each divided into three or more second regions, and
after the second regions located closest to the vehicle in the plurality of first regions are each drawn, the plurality of remaining second regions not drawn in the plurality of first regions are drawn stepwise in order of proximity to the vehicle.

3. The road surface drawing device according to claim 1 or 2, wherein the first region includes
a bright portion, and
a dark portion formed to extend along at least a part of the bright portion and having a luminance lower than that of the bright portion.

4. The road surface drawing device according to claim 1 or 2, wherein, after the drawings of the second regions located closest to the vehicle in the plurality of first regions are each erased, the drawings of the remaining drawn second regions in the plurality of first regions are erased.

5. A road surface drawing device mounted on a vehicle and configured to draw a light pattern on a road surface, wherein
the light pattern is divided into a plurality of regions in a traveling direction of the vehicle,
light is irradiated to all the regions at a start of drawing of the light pattern, and
an illuminance of a farthest region located farthest from the vehicle is lower than an illuminance of a nearest region located closest to the vehicle at the start of the drawing, and the illuminance of the farthest region increases as a drawing time of the light pattern elapses.

6. The road surface drawing device according to claim 5, wherein
the light pattern is divided into the nearest region, the farthest region, and an intermediate region located between the nearest region and the farthest region, and
at the start of the drawing, the illuminance of the farthest region is lower than that of the nearest region and higher than that of the intermediate region.

7. The road surface drawing device according to claim 5 or 6, wherein the illuminance of the farthest region at the start of the drawing changes in accordance with an ambient illuminance around the vehicle.

8. The road surface drawing device according to claim 5 or 6, wherein the illuminance of the nearest region decreases as the drawing time elapses, and the irradiation of light to all the regions is stopped at an end of the drawing.

9. The road surface drawing device according to claim 5 or 6, wherein the illuminance of the farthest region increases in a stepwise manner as the drawing time elapses.

10. The road surface drawing device according to claim 8, wherein the illuminance of the nearest region decreases in a stepwise manner as the drawing time elapses.
